# EUROPÄISCHE PATENTSCHRIFT

(11) **EP 1 071 554 B1**
(45) Veröffentlichungstag und Bekanntmachung des Hinweises auf die Patenterteilung: **03.03.2004**
(21) Anmeldenummer: 99911564.5
(22) Anmeldetag: 14.04.1999
(51) Int. Cl.: B29C 70/38, B29C 70/08

(54) **STRUKTURBAUTEIL AUS FASERVERSTÄRKTEM THERMOPLASTISCHEM KUNSTSTOFF**
STRUCTURAL COMPONENT CONSISTING OF FIBRE-REINFORCED THERMOPLASTIC PLASTIC
COMPOSANT STRUCTURE EN THERMOPLASTIQUE RENFORCE PAR DES FIBRES

(30) Priorität: 15.04.1998 CH 86198
(43) Veröffentlichungstag der Anmeldung: 31.01.2001
(73) Patentinhaber: RCC Regional Compact Car AG, 8700 Küsnacht (CH)
(72) Erfinder: KÄGI, Peter, CH-8632 Tann (CH); JAGGI, Diego, CH-8049 Zürich (CH)
(86) Internationale Anmeldenummer: PCT/CH1999/000150
(87) Internationale Veröffentlichungsnummer: WO 1999/052703

(56) Entgegenhaltungen:
- WO-A-90/06226
- US-A- 5 435 869
- PATENT ABSTRACTS OF JAPAN vol. 10, no. 200 (M-498) [2256], 12. Juli 1986 (1986-07-12) & JP 61 043541 A (MAZDA), 3. März 1986 (1986-03-03)

## Beschreibung

Die Erfindung betrifft ein Strukturbauteil aus faserverstärktem thermoplastischem Kunststoff gemäss Oberbegriff von Anspruch 1 sowie ein Verfahren zur Herstellung eines derartigen Strukturbauteils.

Solche bekannte faserverstärkte Form- und Strukturteile sind im allgemeinen entweder mit kostengünstigen Serienverfahren und mit nur relativ geringer Faserverstärkung herstellbar, womit wohl eine weite Formenvielfalt möglich ist, welche jedoch tragende Funktionen nicht erfüllen können. Oder es sind relativ teure, aufwendige Verfahren zur Herstellung von Strukturverbundteilen mit hohem Endlosfaseranteil erforderlich, welche Strukturteile für anspruchsvolle tragende Funktionen ermöglichen, wobei die Formgebung hier jedoch oft beschränkt ist bzw. einen nochmals erhöhten Aufwand erfordern würde. Mit den bekannten kostengünstigen Herstellverfahren können kurz- oder langfaserverstärkte Formteile mit relativ geringem Faseranteil und entsprechend beschränkten mechanischen Eigenschaften wie Festigkeit, Steifigkeit, Sprödigkeit und Kriechverhalten produziert werden. Solche Verfahren sind z.B. das Kurzfaser-Spritzgiessen, welches eine sehr gute Formgebung ermöglicht, aber infolge der sehr eingeschränkten verwendbaren Faserlängen (meist unter 3 mm) und der verhältnismässig geringen Anteile von Verstärkungsfasern jedoch mechanisch noch relativ schwach und spröd sind. Bei einem weiteren bekannten Verfahren, dem Langfaser-Fliesspressen, sind grössere Faserlängen über 5 mm, z.B. 10 - 30 mm, möglich, welche bei guter Konsolidierung teilweise verbesserte mechanische Eigenschaften, vor allem auch reduzierte thermische Dehnungen, ermöglichen. Es sind verschiedene Methoden zum formgerechten Einbringen der Langfaser-Schmelze bekannt, z.B. mittels Transportbändern und Messern zum Teilen der Schmelze in der Form oder mittels einer steuerbaren Auftragsvorrichtung gemäss EP 769 358. Mit formgerechtem Einbringen können kurze Fliesswege und Schonung der Langfasern erreicht werden. Auch damit sind jedoch noch keine keine tragenden Strukturen machbar. Insbesondere anspruchsvolle tragende Strukturteile, wie z.B. für Fahrzeugzellen, Chassisteile oder tragende Karosserieteile oder auch für leichte, aber stabile Transportbehälter, Sportgeräte usw., sind mit diesen bekannten Verfahren nicht herstellbar. Zu den hohen mechanischen Anforderungen an tragende Strukturteile im Fahrzeugbau werden nebst hohen Festigkeitswerten vor allem auch noch hohe Kriechfestigkeit und günstiges, definiert einstellbares Crash-Verhalten mit hoher Energieaufnahme gefordert. Solche anspruchsvolle tragende Strukturteile sind mit endlosfaserverstärkten Verbundteilen machbar, welche jedoch sehr aufwendige, teure Herstellverfahren bedingen. Dies sind z.B. Pressformen von flächigem thermoplastischem Endlosfaser-Halbzeug (Organoblech-Pressen), welches jedoch nur eine beschränkte Formgebung erlaubt oder einen nochmals erhöhten Aufwand für aufwendigere Formgebung erfordert. Auch tragende Strukturteile aus hochfesten Duromer-Verbundwerkstoffen sind nur aufwendig und teuer herstellbar, erfordern im allgemeinen relativ lange Zykluszeiten und bilden auch bezüglich Recycling zusätzliche Probleme. Sie sind daher für grössere Serien im Fahrzeugbau nicht anwendbar.

Aus der WO 90/06226 sind ein Verfahren und eine Vorrichtung zur Herstellung von Strukturbauteilen aus faserverstärktem thermoplastischem Kunststoff bekannt. Dabei wird zur kontinuierlichen Herstellung ein fadenförmiges Komposit (d.h. ein dünner Komposit-Faden aus parallelen Endlosfasern, die mit einem Thermoplast imprägniert werden) hergestellt, plastifiziert und kontinuierlich mittels einem gesteuerten Ablegekopf frei fallend in vielen Windungen aufeinanderliegend in eine Form abgelegt und anschliessend verpresst, wobei die geschmolzenen Komposit-Fäden in der Form verschwimmen, so dass ein kompakter endlosfaserverstärkter Körper (bzw. Schicht oder Schale) gebildet wird. Zusätzlich zu dieser Ablage von endlosfaserverstärkten Komposit-Fäden kann auch plastifiziertes Langfaser-Material in die Form abgelegt werden. Die Ablage des Langfaser-Materials kann gleichzeitig, vor oder nach der Ablage des Komposit-Fadens erfolgen. Damit können Strukturbauteile geformt und hergestellt werden mit beschränkt unterschiedlichen Faserausrichtungen für beschränkt lasttragende Funktionen, z.B. faserverstärkte Fensterrahmen. Dieses Verfahren ist jedoch sehr aufwendig, und vor allem zeitaufwendig, um durch Ablage von dünnen Komposit-Fäden in sehr vielen Windungen ganze kompakte Schichten und Körper zu bilden. Überdies ist das Handling von plastifizierten dünnen Komposit-Fäden sehr kritisch, da diese an der Vorrichtung kleben können. Zudem können mit diesem Übereinanderlegen von sehr vielen dünnen Komposit-Fäden keine hochfesten Tragstrukturen zum Aufnehmen definierter grosser Kräfte hergestellt werden, wie dies insbesondere bei tragenden Fahrzeugteilen notwendig ist. Mit der WO 90/06226 kann die nachstehende Aufgabe nicht gelöst werden.

Aufgabe der vorliegenden Erfindung ist es daher, diese Beschränkungen bzw. Nachteile der bekannten Methoden und Strukturbauteile zu überwinden und ein tragendes Strukturbauteil zu schaffen sowie ein entsprechendes Herstellverfahren und eine Anlage zu deren Herstellung anzugeben für ein Strukturbauteil, welches anspruchsvolle tragende Funktionen zuverlässig erfüllen kann und welches Strukturbauteil kostengünstig und in verschiedenen Formen herstellbar ist, wobei auch kurze Taktzeiten für eine Serienfertigung erreicht werden sollen. Überdies sollen auch Zusatzfunktionen, wie z.B. Krafteinleitungen in das Strukturbauteil möglich sein.

Diese Aufgabe wird erfindungsgemäss gelöst durch ein Strukturbauteil gemäss Anspruch 1, ein Verfahren nach Anspruch 21 zur Herstellung eines Struktur bauteils.

Mit der Erfindung werden im wesentlichen vorteilhafte Eigenschaften von Langfaser-Pressformteilen, welche einen weiten Bereich von Formgebungen ermöglichen, kombiniert mit den hohen mechanischen Eigenschaften, welche die integrierte lasttragende Tragstruktur mit mindestens einer kraftübertragenden inneren Verbindungsstelle der Endlosfaser-Stränge bildet, indem auf einfache Art in einem Herstellverfahren, relativ kostengünstig und mit kurzen Taktzeiten, leichte und tragfähige Struktur- und Formteile machbar sind.

Die abhängigen Patentansprüche betreffen vorteilhafte Weiterbildungen der Erfindung, welche für verschiedene Anwendungen besondere Vorteile bezüglich Herstellbarkeit, mechanischen Eigenschaften, Gewicht und Herstellkosten sowie Zusatzfunktionen ermöglichen.

Im folgenden wird die Erfindung anhand von Ausführungsbeispielen und Figuren weiter erläutert. Dabei zeigen:
- Fig. 1a, b: im Querschnitt durch einen Endlosfaser-Strang und an einer inneren Verbindungsstelle ein erfindungsgemässes Strukturbauteil
- Fig. 2, 3: Anordnungen von Endlosfaser-Strängen als Tragstruktur in Strukturbauteilen
- Fig. 4, 5: tordierte und umwickelte Endlosfaser-Stränge
- Fig. 6a, b: ein kraftaufnehmendes Insert an einem Endlosfaser-Strang
- Fig. 7: ein Strukturbauteil mit Einlagen
- Fig. 8, 9: Strukturbauteile mit räumlichen Profilquerschnitten
- Fig. 10: eine äussere Verbindungsstelle
- Fig. 11: einen Strukturkörper, gebildet aus mehreren Strukturbauteilen
- Fig. 12: einen Strukturkörper, gebildet aus zwei Halbschalen
- Fig. 13: ein Transportgitter mit abgelegten Endlosfaser-Strängen
- Fig. 14: ein Strukturbauteil mit zwei Lagen von Endlosfaser-Strängen
- Fig. 15: eine Fahrzeugseitenwand mit fachwerkartiger Tragstruktur
- Fig. 16: einen Endlosfaser-Strang mit eingeformtem Auge
- Fig. 17: ein Halteelement am Ende eines Endlosfaser-Strangs
- Fig. 18: einen bewegbaren Fixierstift zur Positionierung von Endlosfaser-Strängen
- Fig. 19a,b: Anlagen zur Herstellung von Strukturbauteilen
- Fig. 20a, b: Ausformungen des Ablegewegs in einem Formwerkzeug
- Fig. 21: eine thermische Konditionierung eines Ablegewegs
- Fig. 22a,b,c: Führungs- und Andrückmittel zur Verlegung von Endlosfaser-Strängen,
- Fig. 23a, b: eine Verbindungsschicht als Kontaktfläche mit einem Übergangbereich,
- Fig. 24 a,b,c: kraftübertragende innere Verbindungsstellen von zwei Endlosfaser-Strängen,
- Fig. 25: eine Tragstrukturanordnung von Endlosfaser-Strängen mit Fixier- und Spannelementen

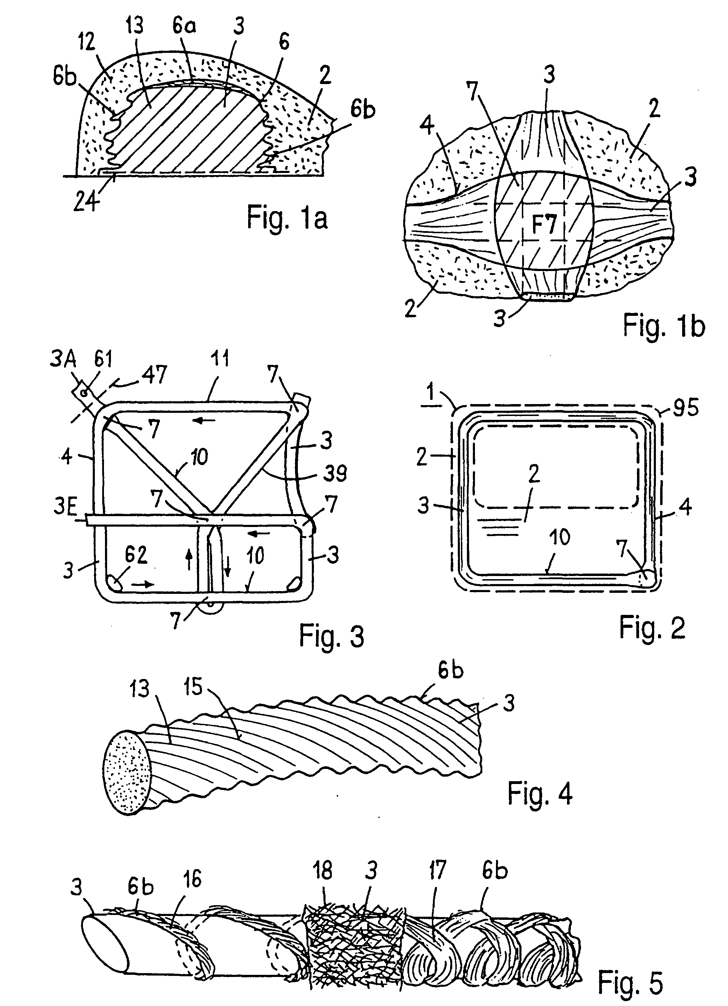

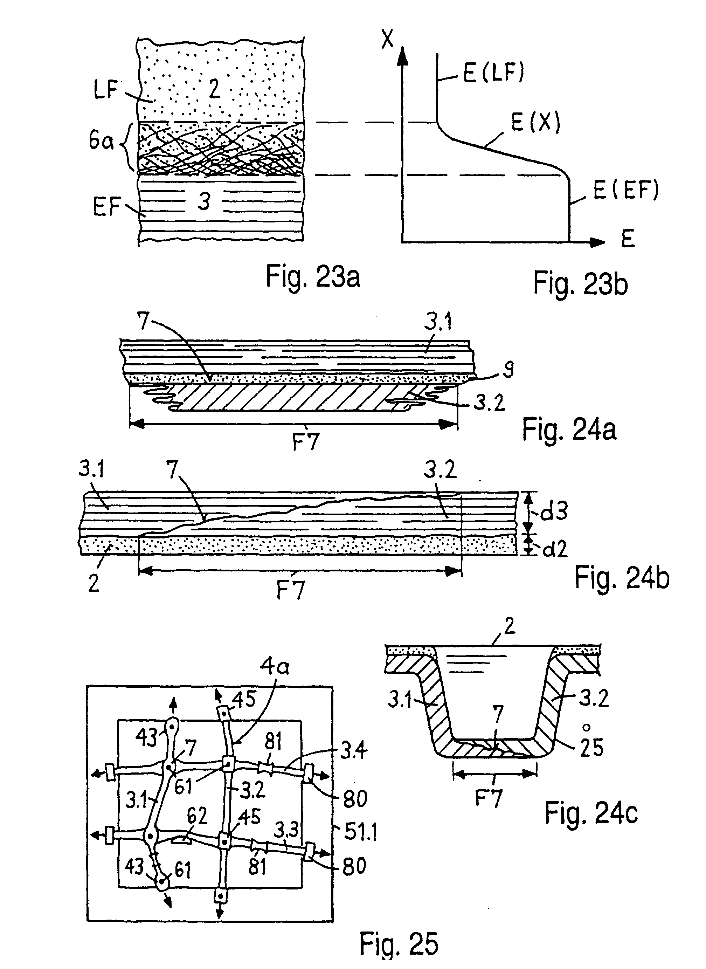

Die Fig. 1a, 1b illustrieren beispielsweise den Aufbau eines Strukturbauteils aus faserverstärktem thermoplastischem Kunststoff. Fig. 1a zeigt einen Querschnitt durch einen Endlosfaser-Strang 3 und Fig. 1b zeigt eine kraftübertragende innere Verbindungsstelle 7 zweier Endlosfaser-Stränge. Der Strukturbauteil weist eine formbildende langfaserverstärkte thermoplastische Matrix 2 auf und eine integrierte lasttragende Tragstruktur 4, welche aus konsolidierten Endlosfaser-Strängen 3 mit thermoplastischer Matrix gebildet wird. Wesentlich ist hier, dass die langfaserverstärkte Matrix und die Matrix der Endlosfaser-Stränge-soweit miteinander kompatibel sind, dass sie an ihren gegenseitigen Kontaktflächen 6 (Interface) miteinander verschmolzen, d.h. thermoplastisch verbunden sind. Die Tragstruktur 4 weist mindestens eine kraftübertragende innere Verbindungsstelle 7 zwischen zwei Endlosfaser-Strängen 3 auf. Um besonders gute Verbindungen an den Kontaktflächen zu erreichen, können die Kontaktflächen 6 mindestens teilweise als Verbindungsschichten 6a ausgebildet sein, welche einen Übergangsbereich zwischen der langfaserverstärkten Matrix 2 und den Endlosfaser-Strängen 3 bilden. Dies wird in den Fig. 23a und 23b weiter erläutert. Mit Vorteil können die Kontaktflächen 6 zwecks optimaler Verbindung und Kraftübertragung von den Endlosfaser-Strängen 3 auf die langfaserverstärkte Matrix 2 auch als strukturierte unebene Ausformungen aufweisende vergrösserte KontaktOberflächen 6b ausgebildet sein. Dies ist auch in den Fig. 4, 5 illustriert.

Fig. 1b zeigt eine kraftübertragende innere Verbindungsstelle 7 zwischen zwei Endlosfaser-Strängen 3, welche für die mechanische Stabilität der Tragstruktur 4 von entscheidender Bedeutung sind. Für gute Kraftübertragung muss dazu eine optimale thermoplastische Verbindung, vorzugsweise an relativ grossen Kontaktflächen F7, hergestellt werden. Dazu sind die Endlosfaser-Strange 3 an der Verbindungsstelle 7 stark abgeflacht und verbreitert. Weitere Illustrationen dazu zeigen die Fig. 24a, b, c.

Die Endlosfaser-Stränge 3 können je nach Anforderungen an den resultierenden Strukturteil in verschiedenen Formen eingesetzt werden, sowohl bez. Querschnittsformen (rund, flach etc.) als auch bez. ihrer Zusammensetzung und Oberflächenstruktur. So werden z.B. UD-Fasern, Prepregs, Rovings und ergänzend Gewebebänder, Gewirke oder faserige Schichten eingesetzt.

Beispiele dieser Tragstruktur 4 sind in den Fig. 2 und 3 gezeigt, wobei die Endlosfaser-Stränge 3 vorzugsweise mindestens eine geschlossene Masche 10 mit einer kraftübertragenden inneren Verbindungsstelle 7 bilden. Die Fig. 2 zeigt als Beispiel eine geschlossene Masche oder Schlaufe 10 als Tragstruktur und äusserer Rahmen einer Fahrzeug-Heckklappe 95, deren Form durch die langfaserverstärkte Matrix 2 gebildet wird.

Fig. 3 zeigt eine Tragstruktur 4, bei der die Endlosfaser-Stränge in verschiedene Richtungen verlaufend, ein fachwerkartiges Muster 11 bilden und an inneren Verbindungsstellen 7 miteinander thermoplastisch verbunden sind. Die Tragstruktur 4 eines Strukturbauteils kann dabei aus einem Endlosfaser-Strang gebildet werden oder es können auch mehrere Endlosfaser-Stränge, nach Bedarf auch mit unterschiedlicher Stärke und Querschnittsform, eingesetzt werden. Es ist wichtig, dass ein Materialschluss zwischen der langfaserverstärkte Matrix 2 und den Endlosfaser-Strängen 3 erreicht wird, wozu die Matrixmaterialien der beiden Elemente vorzugsweise identisch sind, mindestens aber soweit kompatibel sein müssen, dass die beiden Materialien an den Grenzflächen 6 durch Diffusion miteinander vermischt werden.

Als Matrixmaterialieh für die langfaserverstärkte Matrix 2 und die Endlosfaser-Stränge 3 eignen sich Polypropylen (PP), Polyamid (PA), Polyethylentherephtalat (PET), Polybutylentherephthalat (PBT), thermoplastische Polyurethanen (PUR), Polycarbonat (PC) als kostengünstigere technische Kunststoffe für entsprechende Anwendungen, während Polyimide (PI), Polyphenylsulfid (PPS) oder Polyetheretherketon (PEEK) für besonders anspruchsvolle Anwendungen denkbar sind.

Als Verstärkungsfasern 13 der Endlosfaser-Stränge 3 wird vorzugsweise Glas, für anspruchsvolle Aufgaben auch Kohle oder Aramid eingesetzt, während für die Langfaser-Verstärkung 12 meist die kostengünstigen Glasfasern ausreichen.

Mit den Endlosfaser-Strängen der Tragstruktur 4 werden die hohen mechanischen Eigenschaften der Strukturbauteile erreicht, während die Langfaservertärkte Matrix 2 eine Form-gebungs- und Stützungsfunktion bildet. Dazu ist es wesentlich, dass zwischen Endlosfaser-Strängen und Langfaserverstärkter Matrix ein sehr guter Kontakt und gute Kraftübergang erreicht wird, wozu die langfaservertärkte Matrix auch einen genügend hohen Faseranteil aufweisen sollte, um damit auch die Unterschiede in der thermischen Dehnung zu minimieren. Die Verstärkung der Langfaserverstäkten Matrix sollte daher mindestens einen Faseranteil von 10 Vol%, vorzugsweise 15 - 25 Vol% aufweisen. Während die Endlosfaser-Stränge 3 einen Faseranteil von mindestens 40 Vol%, vorzugsweise von 45-60 Vol% aufweisen.

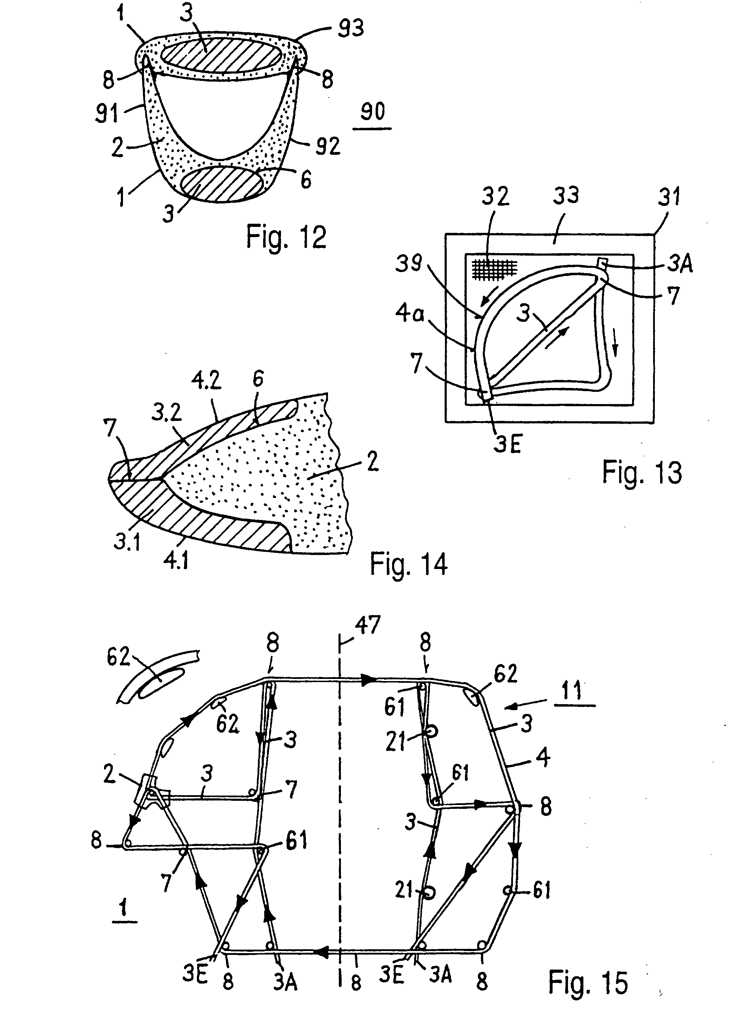

Um die Endlosfaser-Stränge je nach Ablegewegen 39 (Fig. 3, 13) gut biegen und auch nach Bedarf formen zu können, sind sie vorzugsweise tordiert, gemäss Fig. 4. Um sie auch beim Verpressen gut zusammenzuhalten, können die Endlosfaser-Stränge 3 auch umwickelt (16 in Fig. 5) oder von einem geflochtenen Schlauch 17 ummantelt sein. Damit kann auch eine strukturierte, vergrösserte, Ausformungen aufweisende Kontaktfläche 6a erreicht werden. Eine weitere vorteilhafte Verbesserung des Kontaktes kann mit einer Vernadelung 18 erreicht werden, mit welcher Faserenden nach allen Richtungen aus den Strängen 3 hervorstehen und dadurch in die umschmolzene langfaserverstärkte Matrix 2 hineinreichen. Fig. 4 zeigt einen runden, Fig. 5 einen flachen Querschnitt. Die Endlosfaser-Stränge 3 weisen grossteils längsorientierte Endlosfasern auf, welche mit Matrixmaterial voll imprägniert, kompaktiert und konsolidiert sind. Bei der Herstellung der konsolidierten Endlosfaser-Stränge kann die Tordierung auch unterschiedlich stark ausgeführt werden, je nachdem, ob bei der Verlegung auf dem Ablegeweg grössere oder kleinere Krümmungen auftreten, d.h. ein Endlosfaser-Strang kann im Bereich starker Krümmung eine entsprechend stärkere Tordierung und in Bereichen schwacher Krümmung eine sehr geringe Tordierung aufweisen. Falls keine Krümmungen zur Seite auftreten, können auch flache Bänder ohne Tordierung, d.h. im wesentlichen UD-Bänder, eingesetzt werden.

Die durch Fliesspressen hergestellte langfaserverstärkte Matrix weist vorzugsweise grössere Faserlängen auf als dies beim Spritzgiessen möglich ist. Dazu sollte ein grosser Anteil der Fasern mindestens 5 mm Länge aufweisen, wobei vorzugsweise die Faserlänge grossteils in einem Bereich von 10 - 30 mm liegen kann. Wichtig ist eine einwandfreie Imprägnierung, Vermischung und Konsolidierung auch der langfaserverstärkten Matrix.

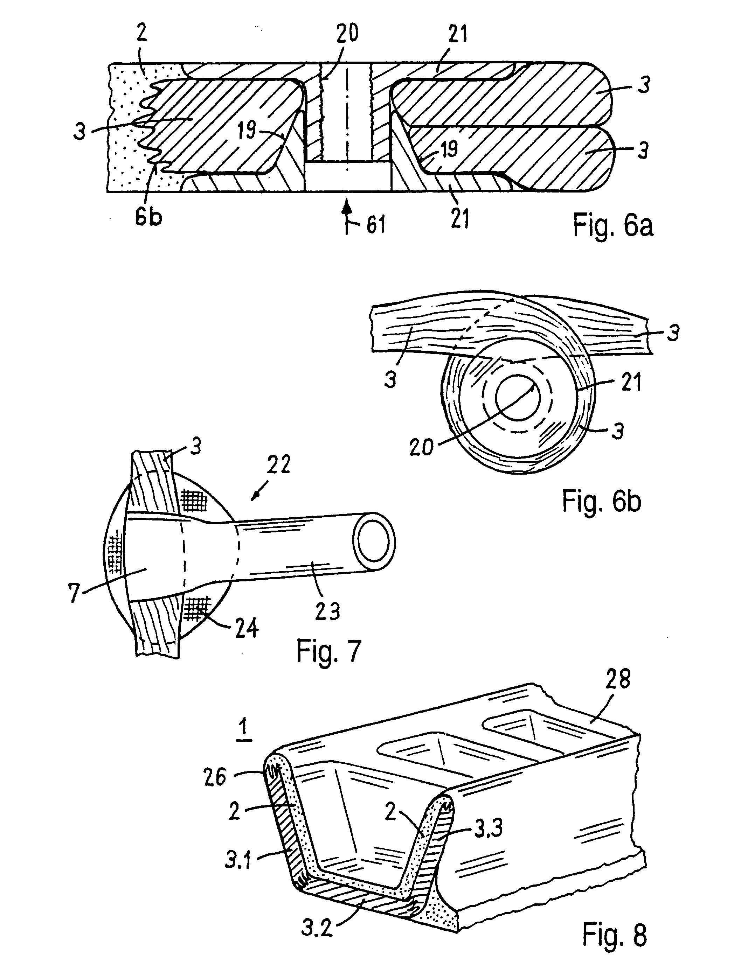

Da die plastifizierten Endlosfaser-Stränge 3 bei der Verlegung in beliebige Richtungen bewegt und umgeformt werden können, so können auf einfache Art auch kraftaufnehmende Inserts 21, wie in Fig. 6 dargestellt, mit den Endlosfaser-Strängen verbunden bzw. von diesen umschlungen werden. Damit können kraftaufnehmende Elemente, - z.B. Befestigungselemente wie Sicherheitsgurt-Verankerungen in Fahrzeugzellen hergestellt werden (Fig. 15).

Fig. 6a zeigt im Schnitt und Fig. 6b von oben ein Beispiel eines zweiteiligen Inserts 21, welches durch das Schliessen der Form bis zur gewünschten Lage zusammengedrückt wird und dadurch mittels einer ansteigenden Flanke 19 die Endlosfaser-Stränge 3 zudem noch definiert spannen kann. Im Insert ist ein Gewinde 20 angebracht. Auf der rechten Seite in Fig. 6a liegt die Überlappung des Endlosfaser-Strangs 3, welcher hier entsprechend mehr zusammengedrückt und verformt wird.

Je nach Anforderungen an das Strukturbauteil können neben Inserts auch weitere Einlagen integriert werden, wie in Fig. 7 dargestellt ist. Hier ist beispielsweise ein hochfestes endlosfaserverstärktes Rohrprofilstück 23 mit abgeflachtem Ende mit einem Endlosfaser-Strang 3 verbunden, wobei hier zudem noch eine lokale Endlosfaser-Gewebeeinlage 24 die Krafteinleitungen unterstützt. Wichtig ist immer die einwandfreie thermoplastische Verbindung der Elemente.

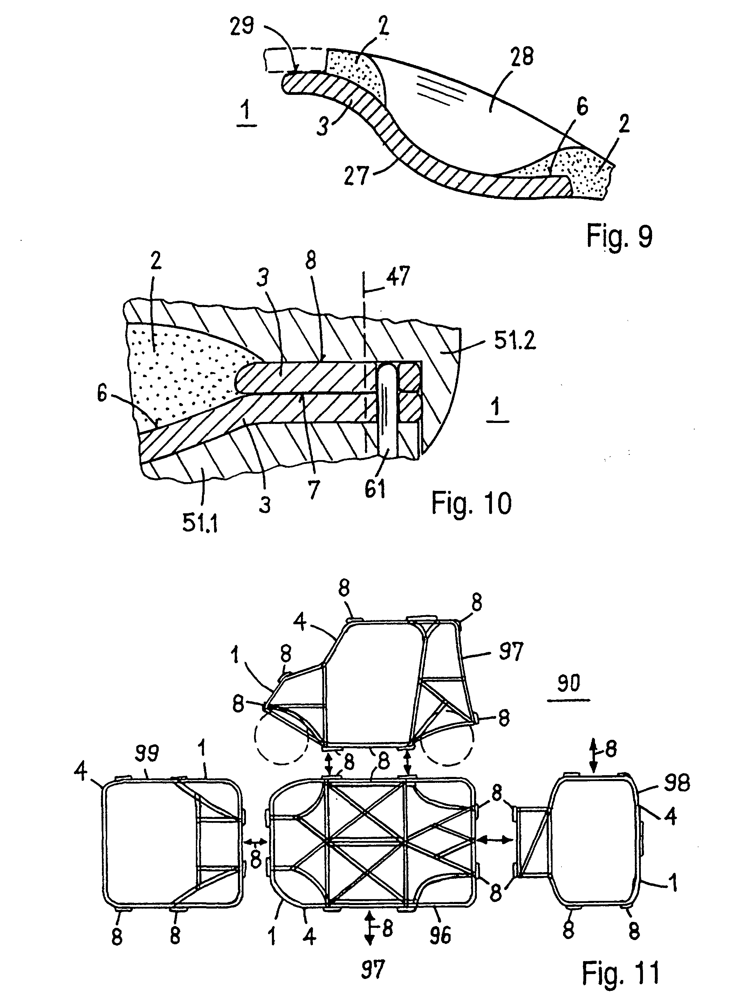

Die weite Ausgestaltungs- und Formungsmöglichkeiten der erfindungsgemässen Strukturbauteile werden in den Fig. 8 und 9, welche räumliche "Profilquerschnitte" 26, 27 bilden, illustriert. Fig. 8 zeigt dabei ein aus drei Endlosfaser-Strängen 3.1 - 3.3 zusammengesetztes, leicht geöffnetes U-Profil, welches über eine Verrippung 28 der langfaserverstärkten Matrix 2 verbunden ist.

Fig. 9 zeigt beispielsweise einen Schnitt durch einen Rahmenträger 27 einer Fahrzeugzelle, welcher einen Flansch 29 zur Aufnahme eines Scheibenglases enthält und welcher wiederum Versteifungsrippen 28 in Kombination mit den krafttragenden profilierten, flachen Endlosfaser-Strängen 3 aufweist.

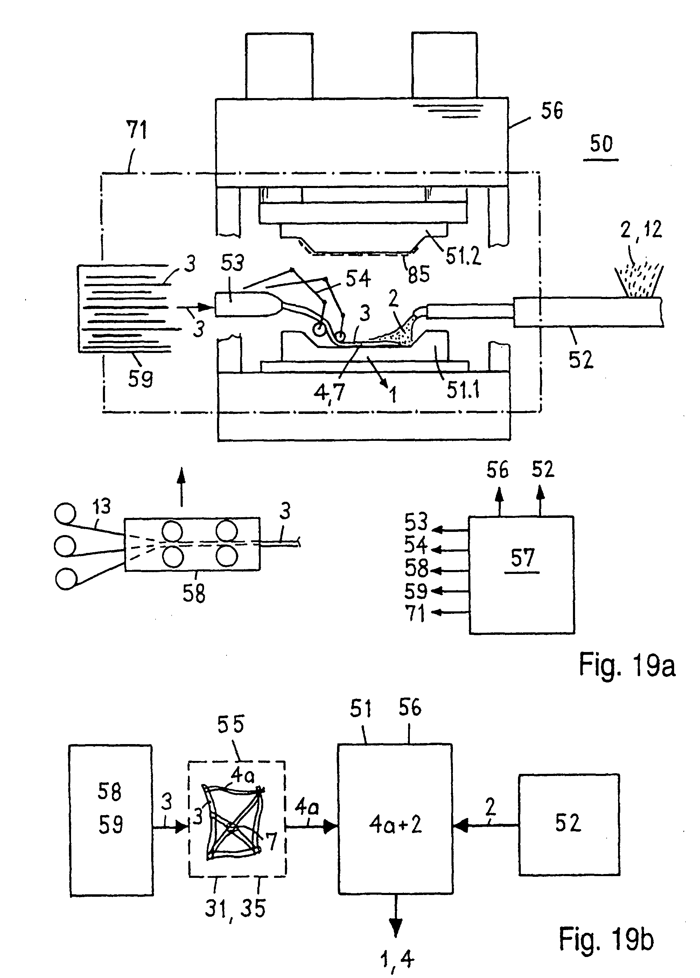

Mit Vorteil und je nach Anwendung können an den Strukturbauteilen offene äussere Verbindungsstellen 8 ausgebildet werden, welche aus Endlosfaser-Strängen bestehen, um damit eine bestmögliche Krafteinleitung in das Strukturbauteil sicherzustellen, wie dies im Beispiel von Fig. 10 gezeigt ist durch entsprechende Formwerkzeugteile 51.1, 51.2 (s. Fig. 19). Damit können Strukturkörper 90 in weitgehend beliebiger Art und Weise aus mehreren einzelnen Strukturbauteilen 1 zusammengestellt werden, indem diese Strukturbauteile an äusseren Verbindungsstellen 8, welche vorzugsweise aus Endlosfaser-Strängen gebildet werden, miteinander verbunden werden. Dies kann vorzugsweise durch Verschweissen oder allenfalls auch durch Kleben erfolgen. Analog zu den inneren Verbindungsstellen 7 sind auch diese äusseren Verbindungsstellen 8 vorzugsweise grossflächig ausgebildet.

Das Beispiel von Fig. 11 zeigt eine Fahrzeugzelle, welche aus einer Bodengruppe 96, zwei Seitenwänden 97, einem Heckteil 98 und einem Frontteil 99 zusammengesetzt wird durch Verbinden der Stellen 8.

Fig. 12 zeigt ein weiteres Beispiel eines Strukturkörpers, welcher aus zwei Strukturbauteilen 1, hier als Halbschalen ausgebildet, zusammengesetzt ist: aus einem U-Profil 92 und einem Deckel 93, welche zusammen den Hohlprofilträger 91 bilden mit unterschiedlichen Querschnittsformen der Endlosfaser-Stränge 3.

Zur Herstellung von erfindungsgemässen Strukturbauteilen eignet sich das folgende Verfahren, welches sich z.B. mit einer Anlage wie in Fig. 19 gezeigt ist, ausführen lässt:

Eine plastifizierte, langfaserverstärkte Matrix bzw. Kunststoffmasse wird formgerecht in ein offenes, zweiteiliges Formwerkzeug 51.1, 51.2 in einer Presse abgelegt, wobei im gleichen Zyklus mit einer Ablegevorrichtung 54 konsolidierte, plastifizierte Endlosfaser-Stränge 3 vor und/oder nach der langfaserverstärkten Masse örtlich definiert längs vorgegebener Ablegewege 39 in das Formwerkzeug eingelegt und durch Fixiermittel 40 soweit an Ort gehalten werden, dass mit dem Pressen und Schliessen des Formwerkzeugs 51 eine gewünschte Tragstruktur 4 der Endlosfaser-Stränge 3 entsteht und wobei mit dem Verpressen vor allem auch gleichzeitig eine einwandfreie thermoplastische Verbindung an der Kontaktfläche 6 zwischen langfaserverstärkter Matrix 2 und Endlosfaser-Strängen 3 hergestellt wird.

Vorzugsweise werden dabei zuerst die Endlosfaser-Stränge 3 in das untere Formwerkzeug 51.1 abgelegt und anschliessend die langfaserverstärkte Matrix 2 darauf eingebracht, worauf dann die Verpressung erfolgt.

In einer anderen Variante des Herstellverfahrens können die Endlosfaser-Stränge 3 zur Bildung einer vorgeformten Tragstruktur 4a auf ein Transportgitter 31 abgelegt, darauf fixiert und anschliessend in das offene Formwerkzeug 51 transferiert werden (s. Fig. 19b). Hier können die Ablage der Endlosfaser-Stränge 3 und das Einbringen der langfaserverstärkten Matrix 2 in die Form nebeneinander und gleichzeitig erfolgen, womit kürzere Herstellzyklen erreichbar sind. Fig. 13 zeigt ein solches Transportgitter 31 zum Ablegen der Endlosfaser-Stränge auf einem Einlegegitter 32 in einem Transferrahmen 33 zum Transfer in die Presse. Das Einlegegitter kann aus einem grobmaschigen Textilgitter (z.B. mit 4 - 10 mm Maschenweite) bestehen und nach dem Verpressen im Strukturbauteil verbleiben. Der Transferrahmen 33 wird dann mit einem neuen Einlegegitter 32 für den neuen Zyklus versehen. Durch Einschmelzen der Endlosfaser-Stränge in das Einlegegitter kann eine sehr gute Fixierung entsprechend dem erforderlichen Ablegeweg 39 erreicht werden. Als flexible Einlegegitter können z.B. auch Glasfasergitter eingesetzt werden. Durch Anpressen an die Werkzeugform 51 wird die gewünschte räumliche Form der Tragstruktur 4a, 4 erreicht. Es können aber auch leichte, formfeste metallische Drahtgitter eingesetzt werden, mit welchen eine dreidimensional vorgeformte Tragstruktur 4a erzeugt werden kann. Die Transportgitter 31 können auch nur Teilbereiche überdecken, in denen die Ablegewege 39 der Endlosfaser-Stränge 3 liegen. Eine weitere Variante besteht im Ablegen der vorgeformten Tragstruktur 4a auf eine geheizte Hilfsform 35 ausserhalb der Presse, wie zu Fig. 19b erläutert wird.

Fig. 14 zeigt ein Strukturbauteil mit zwei Lagen von Endlosfaser-Strängen 3.1 und 3.2, welche Teilstrukturen 4.1 und 4.2 entsprechen. Dies kann hergestellt werden, indem zuerst die Endlosfaser-Stränge 3.1 in die untere Formhälfte 51.1 abgelegt, anschliessend die langfaserverstärte Matrik 2 eingebracht wird und eine erste Verpressung erfolgt. Dann werden das Formwerkzeug und die Presse wieder geöffnet und ein Ablegeweg auf der langfaserverstärkten Matrix 2 für eine zweite Lage von Endlvsfaser-Strängen 3.2 wird oberflächlich durch lokale Heizung aufgeschmolzen, worauf eine zweite Lage von Endlosfaser-Strängen 3.2 verlegt, anschliessend verpresst und dabei mit der langfaserverstärkten Matrix 2 thermoplastisch verbünden wird. Dieses Aufschmelzen kann z.B. durch eine IR-Heizung erfolgen, so weit, dass eine vollständige thermoplastische Verbindung erreicht wird.

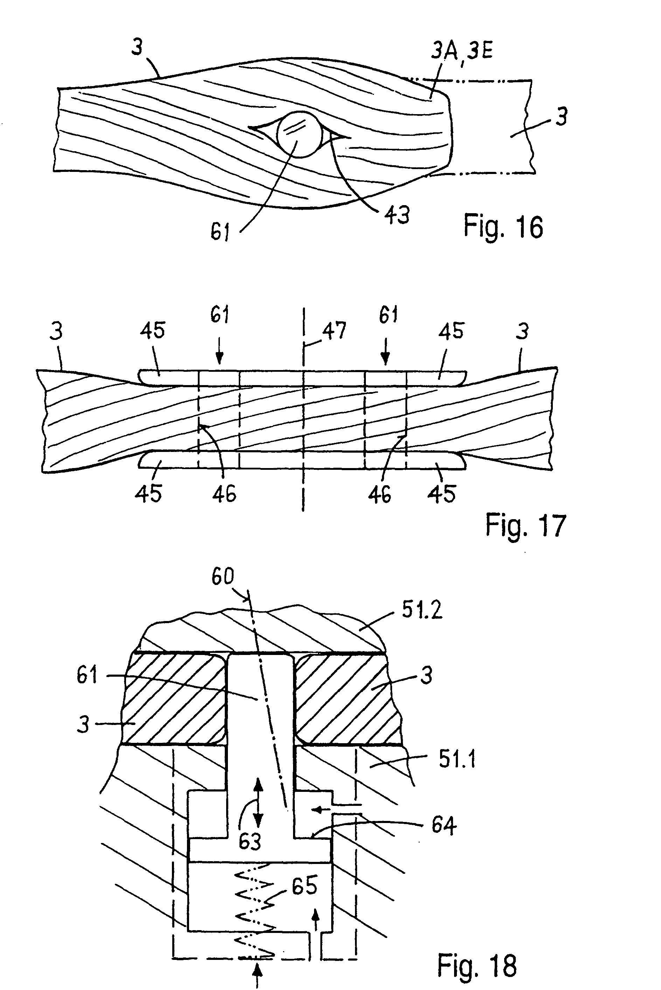

Fig. 15 zeigt als Beispiel schematisch die Verlegung von Endlosfaser-Strängen längs eines Ablegewegs 39 für eine Fahrzeugseitenwand als Strukturbauteil, welche hier eine fachwerkartige Tragstruktur 11 bilden. Die Endlosfaser-Stränge 3 werden hier durch Fixierstifte 61, Umlenkelemente 62 und auch Inserts 21 (hier als Sicherheitsgurt-Verankerung) auf dem Ablegeweg 39 fixiert (s. auch Fig. 6 und 18). Es können dabei einer oder mehrere Endlosfaser-Stränge 3, am Ablegeweg stellenweise auch doppelt oder mehrfach geführt, verlegt werden mit inneren Verbindungsstellen 7.

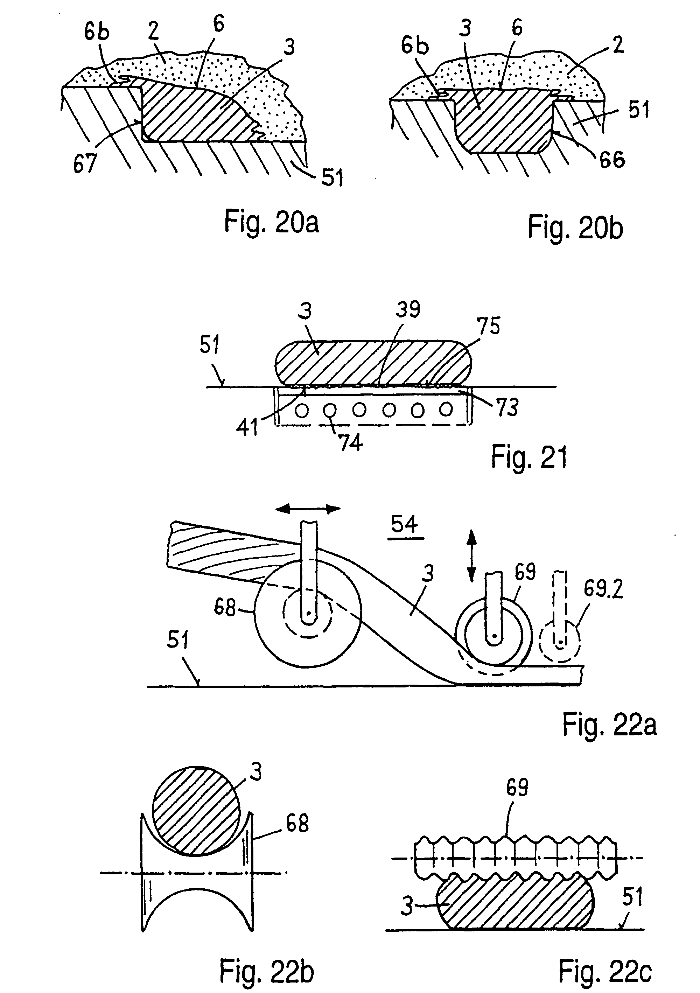

Das Ablegen und Fixieren der Endlosfaser-Stränge 3 kann z.B. auf folgende Arten erreicht werden:
- indem zuerst der Anfang 3A eines Endlosfaser-Strangs am Werkzeug 51 fixiert und anschliessend unter leichter Spannung abgelegt und sein Ende 3E wiederum unter Aufrechterhaltung einer angemessenen Spannung am Formwerkzeug 51 fixiert wird,
- indem der Endlosfaser-Strang 3 durch die Ablegevorrichtung 54 so dosiert an die Form angedrückt wird, dass der Strang flach anliegt und die gewünschte Lage und Querschnittform im Formwerkzeug 51 annimmt (Fig. 22),
- indem der Endlosfaser-Strang 3 mindestens stellenweise, d.h. am Anfang 3A, bei Richtungsänderungen des Ablegewegs und am Ende 3E an der Form angeschmolzen wird (41 in Fig. 21),
- indem die Endlosfaser-Stränge 3 durch Kontakt mit dem kühleren Formwerkzeug 51 soweit verfestigt werden, dass sie während des Verpressens am Formwerkzeug fixiert bleiben und dass sie aber dabei andererseits an ihren Kontaktflächen 6 wieder vollständig mit der heiss eingefüllten Langfaserverstärkte Matrix 2 verschmelzen
- indem im geschmolzenen Zustand am Anfang 3A und Ende 3E eines Endlosfaser-Strangs Augen 43 eingeschmolzen werden durch Verpressen und teilweises Verfestigen (Fig. 16) und wobei diese geformten Enden 3A, 3E nach der Ablage des Endlosfaser-Strangs 3 durch die heisse langfaserverstärkte Matrix oberflächlich wieder aufgeschmolzen und thermoplastisch verbunden werden
- und indem an den Enden 3A, 3E der aufgeschmolzenen Endlosfaser-Stränge Halteelemente 45 mit Einstecklöchern 46 aufgeschmolzen werden, welche nach der Ablage der heissen langfaserverstärkte Matrix 2 mit dieser verschmelzen (Fig. 17).

Fig. 16 zeigt ein Ende 3A oder 3E eines Endlosfaser-Strangs, in welches im geschmolzenen Zustand ein Auge 43 eingeformt wurde, welches in wieder verfestigtem Zustand an einem Fixierstift 61 des Formwerkzeugs eingesteckt werden kann zum Ablegen.

Fig. 17 zeigt Halteelemente 45, welche an Enden 3A, 3E der Endlosfaser-Stränge aufgeschmolzen werden und in welche Einstecklöcher 46 zum Fixieren an Fixierstiften 61 eingestanzt werden. Im gezeigten Beispiel werden zwei Halteelemente hergestellt durch Abstanzen längs der Trennlinie 47. Die Halteelemente 45 bestehen vorzugsweise aus gleichem Material wie die Endlosfaser-Stränge 3.
Die Augen 43 und die Halteelemente 45 können auch innerhalb der Endlosfaser-Stränge 3 angeordnet werden.
Auch an der Anlage (Fig. 19) sind Fixiermittel vorgesehen zur Fixierung der Endlosfaser-Stränge in der gewünschten Endlage während des Herstellprozesses. Wie in Fig. 18 gezeigt, können dazu z.B. Fixierstifte 61 oder Umlenkelemente 62 (Fig. 2, 15) für die Endlosfaser-Stränge eingesetzt werden, welche am unteren Teil des Formwerkzeugs 51.1 angeordnet sind.

Diese Fixierstifte 61 und Umlenkelemente 62 können auch bewegbar ausgebildet sein (63) und unter einer passend gewählten Vorspannung 65 nach oben gedrückt werden. Beim Schliessen der Presse wird der Fixierstift dann durch den oberen Teil 51.2 des Formwerkzeugs nach unten geschoben. Diese Bewegung der Fixierstifte 61 kann auch durch einen steuerbaren Antrieb 64 erfolgen, z.B. elektrisch oder in Form eines hydraulischen Kolbens, welcher auch zum Entformen einsetzbar ist. Die Fixierstifte 61 können auch ausserhalb des herzustellenden Strukturbauteils, jedoch noch im Formwerkzeug, angebracht sein. Das überstehende Stück kann dann nach der Herstellung abgetrennt werden (siehe Trennlinien 47 in Fig. 3 und 10).
Durch schräge Anordnung der Verschiebungsachse 60 kann beim Pressen und Zusammendrücken wiederum eine Spannwirkung erzielt werden (wie im Beispiel von Fig. 6a).

Fig. 19a zeigt eine Anlage zur Herstellung von Strukturbauteilen mit einer Langfaser-Plastifizier- und Einbringvorrichtung 52, einem zweiteiligen Formwerkzeug 51.1, 51.2 in einer Presse 56 und mit einer Endlosfaser-Strang-Plastifizier-Einrichtung 53, welche eine zugeordnete Ablegevorrichtung 54 aufweist, sowie mit einer Steuerung 57 zur zeitlich koordinierten Bewegungsführung der Anlagekomponenten und zur Temperaturkonditionierung, zum Verlegung der Endlosfaser-Stränge 3 und zum formgerechten Einbringen der langfaserverstärkte Matrix 2 sowie zum thermoplastischen Verbinden von Endlosfaser-Strängen 3 und langfaserverstärkte Matrix 2.

Während in der Anlage nach Fig. 19a die vorgeformte Tragstruktur 4a durch die Ablegevorrichtung 54 direkt im Werkzeug 51 abgelegt und gebildet wird, illustriert Fig. 19b als Variante die Bildung der vorgeformten Tragstruktur 4 ausserhalb der Presse mit anschliessendem Transfer ins Werkzeug 51 in der Presse 56 mittels einer Transfervorrichtung 55. Dazu wird die Vorform 4a aus den plastifizierten Endlosfaser-Strängen 3 auf einer Hilfsform 35 oder einer geeigneten Unterlage abgelegt, nach leichter Abkühlung unter den Schmelzpunkt, so dass ein hinreichend formfester Zustand erreicht wird, in das Werkzeug 51 transferiert, dort so weit wieder aufgeheizt, dass mit dem anschliessenden Einfüllen der heissen langfaserverstarten Matrix 2 und mit dem Pressen eine vollständige thermoplastische Verbindung an den Kontaktflächen 6 zwischen der Endlosfaser-Tragstruktur 4 und der Langfaser-Masse 2 entsteht. Oder die vorgeformte Tragstruktur 4a wird auf einem Transportgitter 31 abgelegt (Fig. 13) und mit diesem in die Presse transferiert. Geeignete Prozesstemperaturen für die Materialien Polypropylen-Glas sind beispielsweise: für formfesten Transfer 140° - 150° C, für die heisse langfaserverstärkter Matrix 2 230° - 250° C und für die Kontaktflächen 6 beim Verpressen mindestens 200° C.

Die Fig. 25 illustriert verschiedene Beispiele von Fixierund Spannelementen, mit welchen eine aus Endlosfaser-Strängen 3.1 bis 3.4 gebildete vorgeformte Tragstruktur 4a im Werkzeug 51 während des Verpressens so fixiert und gehalten wird, dass nach dem Verpressen die gewünschte fertige integrierte Tragstruktur 4 in der langfaserverstärkten Matrix resultiert. Dazu sind hier am unteren Formwerkzeug 51.1 verschiedene Fixierelemente 61, Halteelemente 45, Umlenkelemente 62 und Spannelemente 80 angebracht. Auch Klammerelemente 81, z.B. aus Leichtmetall-Blech, welche durch das Verpressen zusammengedrückt werden, können zum Zusammenhalten der Endlosfaser-Stränge eingesetzt sein. Mit diesem Verfahren können zusätzlich gleichzeitig auch z.B. Dekoroberflächen 85 (Fig. 19a) auf einer Seite des Strukturbauteils 1 aufgebracht werden (z.B. für eine Heckklappe 95 nach Fig. 2). Auf der andern Seite werden die Endlosfaser-Stränge 3 bzw. die Tragstruktur 4 integriert. Durch solche beidseitige Einlagen oder Auflagen eines flächigen Strukturbauteils kann der thermische Verzug wesentlich reduziert werden.

Die Fig. 20 - 22 zeigen weitere Führungs- und Fixiermittel der Anlage. In Fig. 20a, b sind Ausformungen im Formwerkzeug 51 dargestellt, z.B. wie Absätze 67 in Fig. 20a und Kanäle 66 in Fig. 20b, in welche die Endlosfaser-Stränge abgelegt und beim Verpressen an Ort, d.h. am vorgegebenen Ablegeweg 39 gehalten werden.

Fig. 21 zeigt eine thermische Konditionierung am Ablegeweg 39 bzw. an Ausformungen wie Kanälen und Absätzen. Dies kann z.B. in einer thermisch isolierenden Schicht 73 bestehen, welche das Abkühlen des Endlosfaser-Strangs reduziert. Es kann auch eine thermische Konditionierung 74 angebracht sein, mit welcher der Endlosfaser-Strang 3 je nach Verfahrensschritt geheizt oder gekühlt werden kann. Eine Strukturierung 75 der Oberfläche kann, falls beabsichtigt, eine lokale Fixierung der EF-Stränge 3 am Formwerkzeug 51 ebenfalls verstärken.

Die Fig. 22a bis c zeigen Führungs- und Andrückmittel der Ablegevorrichtung 54. Ein Endlosfaser-Strang wird hier durch Führungsrollen 68 auf dem Ablegeweg geführt und durch eine Andrückrolle 69 durch entsprechende Steuerung so weit verformt und angedrückt, dass einerseits die gewünschte Querschnittsform entsteht und dass andererseits der Endlosfaser-Strang am Formwerkzeug 51 auch angedrückt und fixiert wird. Die Ablegevorrichtung 54 kann auch zwei oder mehr während des Verlegens wechselbare Andrückrollen (69.2) aufweisen, um damit unterschiedliche Formgebungen, z.B. an Verbindungsstellen 7, zu erzeugen.

Der Anlage kann auch eine Konsolidierungsvorrichtung 58 für die Endlosfaser-Stränge zugeordnet sein. Deren Herstellung kann z.B. aus Endlosfaser-Rovings erfolgen, welche mit Matrixmaterial imprägniert und unter passender Verdrehung kompaktiert und konsolidiert werden. Oder es kann auch eine Umformung aus UD (unidirektionalen)-Bändern (tapes) durchgeführt werden.

Eine weitere Variante der Anlage umfasst einen Speicher 59 für die Endlosfaser-Stränge, aus welchem die abgelängten und konsolidierten Endlosfaser-Stränge 3 entnommen, vollständig aufgeschmolzen und verlegt werden. Vorzugsweise werden die Endlosfaser-Stränge im Speicher 59 dabei bis nahe an ihre Erweichungstemperatur vorgeheizt.

Bei Bedarf kann auch eine Heizgas- oder Schutzgaskonditionierungs-Einrichtung 71 in der Anlage vorgesehen sein, um einerseits Oxidation der Matrixmaterialien zu verhindern und andererseits entsprechend den Prozessschritten lokal dosiert Endlosfaser-Stränge und Ablegewege 39 zu heizen bzw. zu kühlen.

Die Fig. 23 illustrieren optimale Verbindungen an der Kontaktfläche 6 zwischen Endlosfaser-Strängen und langfaserverstärkter Matrix. Fig. 23a zeigt eine Kontaktfläche 6, welche als Verbindungsschicht 6a ausgebildet ist und eine Schichtdicke d von weniger als 1 mm aufweisen kann, z.B. von 0.1 bis 0.5 mm. Diese Verbindungsschicht wird durch einen Misch- oder Übergangsbereich gebildet, indem der Endlosfaseranteil abnimmt und der Langfaseranteil zunimmt, womit eine besonders gute thermoplastische Verbindung zwischen Endlosfaser-Strängen 3 und langfaserverstärkter Matrix 2 erreicht werden kann. Solche Verbindungs- oder Mischschichten 6a können z.B. durch Aufrauhen, Vernadeln oder strukturierte Oberflächen der Endlosfaser-Stränge mit vorstehenden Fasern erzeugt werden. Damit wird ein inniger Kontakt aus Fasergemisch von Endlosfaser-Strängen und Langfaser-Schicht erreicht und mit einem entsprechend ausgeglichenen Übergang der mechanischen Eigenschaften ohne sprunghafte Änderungen. Dies ist in Fig. 23b illustriert, welche den Verlauf des E-Moduls (in EF-Richtung) im Übergangsbereich zeigt. Über die Schichtdicke d nimmt das E-Modul hier kontinuierlich vom hohen Wert des Endlosfaser-Strangs 3 auf den mehrfach tieferen Wert der langfaserverstärkten Matrix 2 ab.

Die Fig. 24a, b, c illustrieren Beispiele guter Kraftübertragungen an inneren Verbindungsstellen 7 zwischen zwei Endlosfaser-Strängen 3.1, 3.2. In Fig. 24a ist zwischen zwei sich kreuzenden Endlosfaser-Strängen eine dünne Zwischenschicht 9 aus Langfaser-Material eingebracht, welche schädliche Lufteinschlüsse vermeiden hilft, indem beim Verpressen sich allfällige Lufteinschlüsse durch die Langfaser-Masse hindurch relativ gut wegleiten lassen. Zudem ist auch diese Verbindungsstelle besonders grossflächig F7 ausgebildet. In Fig. 24b sind zwei Endlosfaser-Stränge 3.1, 3.2 längs miteinander über einen ausgedehnten Bereich F7 verbunden, der zudem ca. auf das Zweifache verbreitert ist und der auch strukturiert bzw. ausgeformt sein kann zwecks Vergrösserung der gegenseitigen Kontaktfläche. Vorteilhaft ist überdies, wenn die Schichtdicke d3 der Endlosfaser-Stränge 3 mindestens so gross ist wie die Schichtdicke d2 der darüberliegenden langfaserverstärkten Matrix 2. Fig. 24c zeigt ein Beispiel eines räumlichen U-förmigen Profils mit Flanschen, welches aus zwei Endlosfaser-Strängen (hier als flache Bänder 3.1, 3.2) an einer Verbindungsstelle 7 zusammengesetzt sind. Auch diese Kraftübertragende Verbindungsstelle 7 ist grossflächig ausgebildet (F7). Ergänzt durch eine dazwischen liegende Verrippung aus langfaserverstärkter Matrix ergibt dies ein biegesteifes Profil.

Zusammenfassend sind beim Verlegen der Endlosfaser-Stränge und zur Bildung der Tragstruktur mit inneren kraftübertragenden Verbindungsstellen folgende wichtige Kriterien zu erfüllen:
a) Die Endlosfaser-Stränge müssen örtlich definiert auf einem Ablegeweg und
b) in der gewünschten Querschnittsform verlegt sein,
c) sie dürfen beim Pressen nicht unzulässig verschoben oder deformiert werden, so dass im Endzustand nach dem Verpressen die Tragstruktur 4 in der gewünschten Lage und Querschnittsform vorliegt,
d) sie müssen mit der langfaserverstärkten Matrix an den Kontaktflächen 6 sowie
e) die Tragstrukturen 4 in sich an den inneren Verbindungsstellen 7 kraftübertragend verschmolzen sein im Endzustand.

Folgende Mittel sind beispielsweise einsetzbar, um diese Kriterien zu erreichen:
- Die Endlosfaser-Stränge am Anfang 3A fixieren und über den Ablegeweg stellenweise, wo nötig, an Umlenkmitteln und Fixierstiften bezüglich der Form fixieren und spannen;
- am Boden des Werkzeugs fixieren durch Anpressen und Anschmelzen;
- durch entsprechende Formgebung des Werkzeugs mit Kanälen und Absätzen die abgelegten Endlosfaser-Stränge gegen Verschiebungen festhalten;
- die Langfaserverstärkte Matrix so einbringen und verteilen, dass beim Verpressen nur minimale Fliesswege der langfaserverstärkten Matrix am Ablegeweg der Endlosfaser-Stränge auftreten;
- eine vorgeformte Tragstruktur 4a einbringen, fixieren und mit dem Verpressen der Werkzeugform entsprechend in die Endform 4 bringen;
- Prozesssteuerung und thermische Konditionierung der Endlosfaser-Stränge so, dass deren Oberfläche als Kontaktfläche mit der langfaserverstärkte Matrix beim Pressen verschmilzt.

Damit können auf einfache und kostengünstige Art in kurzen Zyklen erfindungsgemässe leichte und stabile tragende Strukturbauteile, d.h. Leichtbau-Strukturteile, mit weitgehend beliebiger Formgebung hergestellt werden.

Im Rahmen dieser Beschreibung werden die folgenden Bezeichnungen verwendet:
- 1: Strukturbauteil
- 2: Langfaserverstärkte Matrix
- 3: Endlosfaser-Stränge
- 3A: Anfang von 3
- 3E: Ende von 3
- 4: Tragstruktur
- 4.1, 4.2: Teilstrukturen
- 4a: vorgeformte Tragstruktur
- 6: Kontaktfläche
- 6a: Verbindungsschicht
- 6b: strukturierte Kontaktfläche
- 7: innere Verbindungsstellen
- 9: dünne Zwischenschicht
- 8: äussere Verbindungsstellen
- 10: Masche
- 11: Fachwerk(-artig)
- 12: Langfaser (LF)-Verstärkung
- 13: Endlosfasern (EF)
- 15: EF tordiert
- 16: EF umwickelt
- 17: EF umflochten
- 18: vernadelt
- 19: Flanke, ansteigend
- 20: Gewinde
- 21: Insert, kraftaufnehmend
- 22: Einlagen
- 23: Rohrprofilstück
- 24: Gewebeeinlage
- 25, 26, 27: räumliche Profilquerschnitte
- 28: Rippen
- 29: Flansch
- 31: Transportgitter
- 32: Einlegegitter
- 33: Transferrahmen
- 35: Hilfsform
- 39: Ablegewege
- 41: anschmelzen
- 43: Augen an 3
- 45: Halteelemente
- 46: Einstecklöcher
- 47: Trennen, Trennlinien
- 50: Anlage
- 51: Formwerkzeug
- 51.1, 51.2: untere, obere Formhälfte
- 52: LF Plastifizier- und Einbringvorrichtung
- 53: EF Plastifiziereinrichtung
- 54: Ablegevorrichtung
- 55: Transfervorrichtung
- 56: Presse
- 57: Steuerung
- 58: EF Konsolidierungsvorrichtung
- 59: EF Strangspeicher
- 60: schräge Verschiebungsachse
- 61: Fixierstifte
- 62: Umlenkelemente
- 63: bewegbar
- 64: steuerbarer Antrieb
- 65: Vorspannung
- 66: Kanäle in 51
- 67: Absätze
- 68: Führungsrollen
- 69: Andrückrollen
- 71: Schutzgas / Heizgas-Konditionierung
- 73: Isolation
- 74: thermische Konditionierung
- 75: strukturierte Oberfläche
- 80: Spannelemente
- 81: Klammerelemente
- 85: Dekorstoff
- 90: Strukturkörper
- 91: Hohlprofilträger
- 92: U-Profil
- 93: Deckel
- 95: Heckklappe
- 96: Bodengruppe
- 97: Seitenwände
- 98: Heckteil
- 99: Frontteil
- EF: Endlosfaser
- LF: Langfaser
- E: E-Modul
- d: Dicke von 6a
- d2: Dicke von 2
- d3: Dicke von 3
- F7: grossflächige 7

## Patentansprüche

1. Strukturbauteil (1) aus faserverstärktem thermoplastischem Kunststoff
mit einer formbildenden, langfaserverstärkten (12) thermoplastischen Matrix (2) und
mit einer integrierten lasttragenden, plastifizierten und konsolidierten, orientierten Endlosfaser-Verstärkung (13) in einer thermoplastischen Matrix, wobei die langfaserverstärkte Matrix (2) und die Endlosfaser-Verstärkung mit thermoplastischer Matrix miteinander verschmolzen bzw. thermoplastisch verbunden sind, **dadurch gekennzeichnet, dass**
die Endlosfaser-Verstärkung aus separaten, einzelnen, lasttragenden Endlosfaser-Strängen (3) mit thermoplastischer Matrix besteht,
welche je einzeln in einer örtlich definierten Lage im Strukturbauteil positioniert sind und welche eine integrierte lasttragende, strangartige Tragstruktur (4) bilden
und mit Bereichen aus langfaserverstärkter Matrix (2) zwischen den separaten Endlosfaser-Strängen (3),
mit mindestens einer flächig ausgebildeten (F7), kraftübertragenden, thermoplastisch verbundenen inneren Verbindungsstelle (7) zwischen zwei separaten Endlosfaser-Strängen (3.1, 3.2) in einer örtlich definierten Position
und wobei die separaten Endlosfaser-Stränge (3) und die langfaserverstärkte Matrix (2) gegenseitige Kontaktflächen (6) bilden, an welchen sie miteinander verbunden sind.

2. Strukturbauteil nach Anspruch 1, **dadurch gekennzeichnet, dass** die Kontaktflächen (6) mindestens teilweise als Verbindungsschichten (6a) ausgebildet sind, welche einen Übergangsbereich zwischen langfaserverstärkter Matrix (2) und Endlosfaser-Strängen (3) bilden.

3. Strukturbauteil nach Anspruch 1 oder 2, **dadurch gekennzeichnet, dass** die Kontaktflächen (6) als strukturierte, unebene Ausformungen aufweisende Oberflächen (6b) ausgebildet sind.

4. Strukturbauteil nach einem der vorangehenden Ansprüche, **dadurch gekennzeichnet, dass** die Endlosfaser-Stränge (3) der Tragstruktur mindestens eine geschlossene Masche (10) bilden.

5. Strukturbauteil nach einem der vorangehenden Ansprüche, **dadurch gekennzeichnet, dass** die Endlosfaser-Stränge in verschiedenen Richtungen verlaufen und an inneren kraftübertragenden Verbindungsstellen (7) fachwerkartig (11) miteinander thermoplastisch verbunden sind.

6. Strukturbauteil nach einem der vorangehenden Ansprüche, **dadurch gekennzeichnet, dass** das Matrixmaterial der langfaserverstärkten Matrix (2) und das der Endlosfaser-Stränge (3) vorzugsweise identisch ist, mindestens jedoch soweit kompatibel, dass die beiden Materialien an den Kontaktflächen (6) durch Diffusion miteinander mischbar sind.

7. Strukturbauteil nach einem der vorangehenden Ansprüche, **dadurch gekennzeichnet, dass** die Matrizen der langfaserverstärkten Matrix (2) und der Endlosfaser-Stränge (3) aus Polypropylen (PP), Polyamid (PA), Polyethylentherephtalat (PET), Polybutylentherephthalat (PBT), thermoplastischen Polyurethanen (PUR), Polycarbonat (PC), Polyacrylaten, Polyimid (PI), Polyphenylsulfid (PPS) oder Polyetheretherketon (PEEK) bestehen und dass die Verstärkungsfasern (13) der Endlosfaser-Stränge (3) vorzugsweise aus Glas, Kohle oder Aramid bestehen und die Verstärkungsfasern (12) der langfaserverstärkten Matrix (2) vorzugsweise aus Glas bestehen.

8. Strukturbauteil nach Anspruch 1, **dadurch gekennzeichnet, dass** die Verstärkungsfasern (12) der langfaserverstärkten Matrix (2) einen Faseranteil von 15 - 25 Vol% aufweist und dass die Endlosfaser-Stränge (3) einen Faseranteil (13) von mindesten 40%, vorzugsweise 45 - 60 Vol% aufweisen.

9. Strukturbauteil nach Anspruch 1, **dadurch gekennzeichnet, dass** die Endlosfaser-Stränge tordiert (15) sind.

10. Strukturbauteil nach Anspruch 1, **dadurch gekennzeichnet, dass** die Endlosfaser-Stränge vernadelt (18), umwickelt (16) oder von einem geflochtenen (17) Schlauch ummantelt sind.

11. Strukturbauteil nach Anspruch 1, **dadurch gekennzeichnet, dass** die langfaserverstärkte Matrix (2) einen grossen Anteil von Fasern (12) mit mindestens 5 mm Länge aufweist, wobei die Faserlänge vorzugsweise grossteils in einem Bereich von 10 - 30 mm liegt.

12. Strukturbauteil nach Anspruch 1, **dadurch gekennzeichnet, dass** kraftaufnehmende Inserts (21) (z.B. Gurtverankerungen) integriert sind, welche direkt mit den Endlosfaser-Strängen (3) verbunden bzw. davon umgeben sind.

13. Strukturbauteil nach Anspruch 1, **dadurch gekennzeichnet, dass** weitere Einlagen (22) integriert sind, z.B. hochfeste endlosfaserverstärkte Rohrprofilstücke (23) und / oder lokale Endlosfaser-Gewebeeinlagen (24), welche mit den Endlosfaser-Strängen (3) verbunden und mit der langfaserverstärkten Matrix (2) verschmolzen sind.

14. Strukturbauteil nach Anspruch 1, **dadurch gekennzeichnet, dass** Endlosfaser-Stränge "räumliche" Profilquerschnitte (25, 26, 27) bilden.

15. Strukturbauteil nach Anspruch 1, **dadurch gekennzeichnet, dass** äussere Verbindungsstellen (8) der Endlosfaser-Stränge vorgesehen sind.

16. Strukturbauteil nach Anspruch 1, **dadurch gekennzeichnet, dass** die Schichtdicke (d3) der Endlosfaserstränge (3) mindestens so gross ist wie die Schichtdicke (d2) der darüber liegenden langfaserverstärkten Matrix (2).

17. Strukturbauteil nach Anspruch 1, **dadurch gekennzeichnet, dass** die kraftübertragenden Verbindungsstellen (7) grossflächig (F7) ausgebildet sind.

18. Strukturbauteil nach Anspruch 1, **dadurch gekennzeichnet, dass** die Verbindungsstellen (7) eine dünne Zwischenschicht (9) aus langfaserverstärkter Matrix aufweisen.

19. Strukturbauteil nach Anspruch 1, **dadurch gekennzeichnet, dass** mindestens zwei Strukturbauteile (1) vorzugsweise an äusseren Verbindungsstellen (8) der Endlosfaser-Stränge (3) miteinander verbunden sind und einen Strukturkörper (90) bilden.

20. Strukturbauteil nach Anspruch 1, **dadurch gekennzeichnet, dass** mindestens zwei Strukturbauteile (1) als Halbschalen ausgebildet und miteinander verbunden sind und, z.B. in Form eines U-Profils (92) mit einem Deckel (93), einen Hohlprofilträger (91) bilden.

21. Verfahren zur Herstellung eines Strukturbauteils aus faserverstärktem thermoplastischem Kunststoff
mit einer formbildenden, langfaserverstärkten (12) thermoplastischen Matrix (2) und mit einer integrierten lasttragenden, plastifizierten und konsolidierten, orientierten Endlosfaser-Verstärkung (13) in einer thermoplastischen Matrix, wobei eine plastifizierte, langfaserverstärkte thermoplastische Matrix (2) formgerecht in ein offenes, zweiteiliges Formwerkzeug (51) in einer Presse (56) abgelegt wird und wobei die langfaserverstärkte Matrix (2) und die Endlosfaser-Verstärkung mit thermoplastischer Matrix miteinander verschmolzen bzw. thermoplastisch verbunden werden, **dadurch gekennzeichnet,**
**dass** im gleichen Zyklus vor und/oder nach dem Einbringen der langfaserverstärkten thermoplastische Matrix (2) mittels einer Ablegevorrichtung (54) oder einer Transfervorrichtung (55) eine vorgeformte Tragstruktur (4a) mit inneren Verbindungsstellen (7) aus separaten, einzelnen, lasttragenden, plastifizierten und konsolidierten Endlosfaser-Strängen (3) im Formwerkzeug abgelegt und geformt wird oder ausserhalb gebildet und ins Formwerkzeug transferiert wird und die Endlosfaser-Stränge (3) durch Fixiermittel soweit an Ort gehalten werden, dass mit dem Pressen und Schliessen des Formwerkzeugs eine gewünschte integrierte lasttragende, strangartige Tragstruktur (4) mit einer örtlich definierten Lage jedes einzelnen Endlosfaser-Strangs (3) im Strukturbauteil entsteht, wobei mit dem Einbringen der langfaserverstärkten Matrix (2) Bereiche aus langfaserverstärkter Matrix (2) zwischen den separaten Endlosfaser-Strängen (3) gebildet werden, und wobei mit dem Verpressen eine thermoplastische Verbindung an den Kontaktflächen (6) zwischen langfaserverstärkter Matrix (2) und den separaten Endlosfaser-Strängen (3) hergestellt wird und wobei mindestens eine flächig ausgebildete (F7), kraftübertragende, thermoplastisch verbundene innere Verbindungsstelle (7) zwischen zwei separaten Endlosfaser-Strängen in einer örtlich definierten Position gebildet wird.

22. Verfahren nach Anspruch 21, **dadurch gekennzeichnet, dass** zuerst die Endlosfaser-Stränge (3) längs eines vorgegebenen Ablegewegs (39) in das untere Formwerkzeug (51.1) abgelegt, anschliessend die langfaserverstärkte Matrix (2) darauf eingebracht wird und dann die Verpressung erfolgt.

23. Verfahren nach Anspruch 21, **dadurch gekennzeichnet, dass** die Endlosfaser-Stränge (3) zur Bildung der vorgeformten Tragstruktur (4a) auf ein Transportgitter (31) abgelegt, darauf fixiert und anschliessend in das offene Formwerkzeug (51) transferiert werden.

24. Verfahren nach Anspruch 23, **dadurch gekennzeichnet, dass** zuerst die langfaserverstärkte Matrix (2) in das Formwerkzeug abgelegt, anschliessend das Transportgitter (31) mit den Endlosfaser-Strängen (3) in das offene Formwerkzeug transferiert wird und schliesslich die Verpressung erfolgt.

25. Verfahren nach Anspruch 21, **dadurch gekennzeichnet, dass** zuerst die vorgeformte Tragstruktur (4a) gebildet und so weit abgekühlt wird, bis sie formfest ist, anschliessend ins Formwerkzeug transferiert, fixiert und allfällig oberflächlich so weit aufgeheizt wird, dass sie beim Verpressen mit der heissen langfaserverstärkten Matrix (2) vollständig thermoplastisch verbunden wird.

26. Verfahren nach Anspruch 21, **dadurch gekennzeichnet, dass** zuerst eine erste Teilstruktur (4.1) aus Endlosfaser-Strängen (3) im Formwerkzeug fixiert wird, dann die langfaserverstärkte Matrix (2) eingebracht und verpresst wird, anschliessend wieder aufgeheizt und eine zweite Teilstruktur (4.2) aus Endlosfaser-Strängen (3) eingebracht und mit einem zweiten Pressvorgang vollständig thermoplastisch verbunden wird.

27. Verfahren nach Anspruch 26, **dadurch gekennzeichnet, dass** zuerst eine Teilstruktur (4.1) bildende Endlosfaser-Stränge (3.1) in die untere Formhälfte (51.1) abgelegt, anschliessend die langfaserverstärkte Matrix (2) eingebracht und eine erste Verpressung erfolgt, worauf Presse und Formwerkzeug wieder geöffnet, ein Ablegeweg auf der langfaserverstärkten Matrix (2) für eine zweite Lage von Endlosfaser-Strängen durch lokale Heizung oberflächlich aufgeschmolzen wird, darauf eine zweite Teilstruktur (4.2) bildende Endlosfaser-Stränge (3.2) verlegt und anschliessend verpresst und dabei mit der langfaserverstärkten Matrix (2) thermoplastisch verbunden wird.

28. Verfahren nach Anspruch 21, **dadurch gekennzeichnet, dass** zuerst der Anfang (3A) eines Endlosfaser-Strangs am Formwerkzeug fixiert wird, anschliessend unter leichter Spannung abgelegt und sein Ende (3E) wiederum unter Aufrechterhaltung einer gewissen Spannung am Formwerkzeug (51) fixiert wird, z.B. mittels Spannelementen (80).

29. Verfahren nach Anspruch 21, **dadurch gekennzeichnet, dass** mehrere Endlosfaser-Stränge (3) nacheinander mit inneren Verbindungsstellen bzw. Kreuzungsstellen (7) untereinander abgelegt werden, so dass eine fachwerkartige Tragstruktur (11) entsteht.

30. Verfahren nach Anspruch 21, **dadurch gekennzeichnet, dass** die Endlosfaser-Stränge (3) durch die Ablegevorrichtung (54) so dosiert an die Form angedrückt werden, dass die Endlosfaser-Stränge flach anliegen und die gewünschte Lage und Querschnittform im Formwerkzeug (51) annehmen.

31. Verfahren nach Anspruch 21, **dadurch gekennzeichnet, dass** die Endlosfaser-Stränge (3) bzw. die Tragstruktur (4) mindestens stellenweise, d.h. am Anfang (3A), bei Richtungsänderungen des Ablegewegs und am Ende (3E) an der Form angeschmolzen werden (41).

32. Verfahren nach Anspruch 21, **dadurch gekennzeichnet, dass** die Endlosfaser-Stränge (3) durch Kontakt mit dem kühleren Formwerkzeug (51) soweit verfestigt werden, dass sie während des Verpressens fixiert bleiben und dass sie dabei aber andererseits an ihren Kontaktflächen (6) wieder vollständig mit der langfaserverstärkten Matrix (2) verschmelzen.

33. Verfahren nach Anspruch 21, **dadurch gekennzeichnet, dass** mindestens am Anfang (3A) und Ende (3E) oder auch innerhalb eines Endlosfaser-Strangs im geschmolzenen Zustand Augen (43) zur Fixierung eingeschmolzen werden durch Verpressen und teilweises Verfestigen und dass diese geformten Enden (3A, 3E) nach der Ablage des Endlosfaser-Strangs (3) durch die heisse langfaserverstärkte Matrix (2) oberflächlich wieder aufgeschmolzen und verbunden werden.

34. Verfahren nach Anspruch 21, **dadurch gekennzeichnet, dass** mindestens an den Enden (3A, 3E) oder auch innerhalb der aufgeschmolzenen Endlosfaser-Stränge Halteelemente (45) mit Einstecklöchern (46) aufgeschmolzen werden, welche bei der Ablage der heissen langfaserverstärkten Matrix (2) mit dieser verschmelzen.

35. Verfahren nach Anspruch 21, **dadurch gekennzeichnet, dass** eine Langfaser-Plastifizier- und Einbringvorrichtung (52) und eine Endlosfaser-Strang-Plastifizier-Einrichtung (53) eingesetzt wird, mit einer Steuerung (57) zur zeitlich koordinierten Bewegungsführung der Anlagekomponenten und zur Temperaturkonditionierung, zum Verlegen der Endlosfaser-Stränge (3) bzw. zur Bildung einer vorgeformten Tragstruktur (4a) mit inneren Verbindungsstellen (7) und zum formgerechten Einbringen der langfaserverstärkten Matrix (2) und mit zugeordneten Fixiermitteln (61, 62, 66, 69, 75, 80) zur Fixierung der einzelnen Endlosfaser-Stränge (3) während des Herstellprozesses, z.B. als Fixier- und Spannelement wie Fixierstifte (61) und Umlenkelemente (62), welche am unteren Teil des Formwerkzeugs (51.1) angeordnet werden.

36. Verfahren nach Anspruch 35, **dadurch gekennzeichnet, dass** die Fixierstifte und Umlenkelemente bewegbar (63) sind und gegen eine Vorspannung (65) durch den oberen Teil (51.2) des Formwerkzeugs beim Schliessen der Presse (56) zugeschoben werden
oder dass die Fixierstifte einen steuerbaren Antrieb (64) aufweisen und zum Entformen einsetzbar sind
oder dass Fixier- und Spannelemente (61, 80) ausserhalb des herzustellenden Strukturbauteils (1), jedoch im Formwerkzeug (51) angebracht werden.

37. Verfahren nach Anspruch 35, **dadurch gekennzeichnet, dass** das Formwerkzeug Ausformungen wie Kanäle (66) und Absätze (67) aufweist, mit welchen die abgelegten Endlosfaser-Stränge (3) beim Verpressen an Ort gehalten werden.

38. Verfahren nach Anspruch 37, **dadurch gekennzeichnet, dass** die Ausformungen, d.h. die Ablegewege (39), im Formwerkzeug thermisch isoliert (73) bzw. konditioniert (74) werden.

39. Verfahren nach Anspruch 35, **dadurch gekennzeichnet, dass** die Ablegevorrichtung (54) Führungs-, Formgebungs- und Andruckmittel aufweist, z.B. in Form von Führungsrollen (68) und Andrückrollen (69).

40. Verfahren nach Anspruch 35, **dadurch gekennzeichnet, dass** eine Konsolidierungsvorrichtung (58) für die Endlosfaser-Stränge eingesetzt wird
oder ein geheizter Speicher (59) für die Endlosfaser-Stränge eingesetzt wird, von welchem die abgelängten konsolidierten Endlosfaser-Stränge (3) entnommen, aufgeschmolzen und zur Bildung der Tragstruktur (4a) verwendet werden,
oder dass eine Heizgas- oder eine Schutzgas-Konditionierung (71) eingesetzt wird.

## Claims

1. Structural component (1) made out of fibre-reinforced thermoplastic plastic material, with a shaping, long-fibre-reinforced (12) thermoplastic matrix (2) and with an integrated load-bearing, plastified and consolidated, oriented continuous fibre reinforcement (13) in a thermoplastic matrix and whereby the long-fibre-reinforced matrix (2) and the continuous fibre reinforcement with thermoplastic matrix are fused together, resp., thermoplastically bonded, **characterized in that** the continuous fibre reinforcement consists of separate, single, load-bearing continuous fibre strands (3) with a thermoplastic matrix which each are in a defined local position within the structural component and which form an integrated load-bearing and strand-like supporting structure (4) and with zones of long-fibre-reinforced matrix (2) between the separate continuous fibre strands (3), with at least one load-transmitting, flat (F7) and thermoplastically bonded internal connecting area (7) between two separate continuous fibre strands (3.1, 3.2) in a defined local position
and whereby the separate continuous fibre strands (3) and the long-fibre-reinforced matrix (2) are defining mutual interfaces (6) where they are fused together.

2. Structural component in accordance with claim 1, **characterized in that** the interfaces (6) at least partially are designed as connecting layers (6a), which form a transition zone between long-fibre-reinforced matrix (2) and continuous fibre strands (3).

3. Structural component in accordance with claim 1 or 2, **characterized in that** the interfaces (6) are designed as structured interfaces having uneven shapings (6b).

4. Structural component in accordance with one of the preceding claims, **characterized in that** the continuous fibre strands (3) of the supporting structure form at least one closed mesh (10).

5. Structural component in accordance with one of the preceding claims, **characterized in that** the continuous fibre strands run in different directions and are thermoplastically bonded together at internal load-transmitting connecting areas (7) in the manner of a framework (11).

6. Structural component in accordance with one of the preceding claims, **characterized in that** the matrix material of the long-fibre-reinforced matrix (2) and of the continuous fibre strands (3) in preference is identical, at least, however, compatible to such an extent, that the two materials are mixable together at the interfaces (6) through diffusion.

7. Structural component in accordance with one of the preceding claims, **characterized in that** the matrices of the long-fibre-reinforced matrix (2) and of the continuous fibre strands (3) consist of polypropylene (PP), polyamide (PA), polyethylenetherephtalate (PET), polybutylene-therephtalate (PBT), thermoplastic polyurethanes (PUR), polycarbonate (PC), polyacrylics, polyimide (PI), polyphenylsulphide (PPS) or polyetheretherketone (PEEK) and that the reinforcing fibres (13) of the continuous fibre strands (3) in preference consist of glass, carbon or aramide and that the reinforcing fibres (12) of the long-fibre-reinforced matrix (2) preferably consists of glass.

8. Structural component in accordance with claim 1, **characterized in that** the reinforcing fibres (12) of the long-fibre-reinforced matrix (2) have a fibre content of 15 - 25 % by volume and that the continuous fibre strands (3) have a fibre content (13) of at least 40 %, in preference 45 - 60 % by volume.

9. Structural component in accordance with claim 1, **characterized in that** the continuous fibre strands are twisted (15).

10. Structural component in accordance with claim 1, **characterized in that** the continuous fibre strands are needle-bonded (18), wrapped (16) or enveloped by a braided (17) tube.

11. Structural component in accordance with claim 1, **characterized in that** the long-fibre-reinforced matrix (2) has a large proportion of fibres (12) with a length of at least 5 mm, whereby the fibre length preferably to a great extent is within a range of 10 - 30 mm.

12. Structural component in accordance with claim 1, **characterized in that** load-bearing inserts (21) (e.g., seat-belt anchoring points) are integrated, which are directly connected with the continuous fibre strands (3), resp., are surrounded by them.

13. Structural component in accordance with claim 1, **characterized in that** further inlays (22) are integrated, e.g., high-strength continuous fibre-reinforced tubular profile parts (23) and / or local continuous fibre fabric inlays (24), which are connected with the continuous fibre strands (3) and fused together with the long-fibre-reinforced matrix (2).

14. Structural component in accordance with claim 1, **characterized in that** the continuous fibre strands form "three-dimensional" profile cross sections (25, 26, 27).

15. Structural component in accordance with claim 1, **characterized in that** external connecting areas (8) of the continuous fibre strands are provided.

16. Structural component in accordance with claim 1, **characterized in that** the layer thickness (d3) of the continuous fibre strands (3) is at least as large as the layer thickness (d2) of the long-fibre-reinforced matrix (2) located above it.

17. Structural component in accordance with claim 1, **characterized in that** the load-transmitting connecting areas (7) are designed with a large surface area (F7).

18. Structural component in accordance with claim 1, **characterized in that** the connecting areas (7) have a thin intermediate layer (9) consisting of long-fibre-reinforced matrix material.

19. Structural component in accordance with claim 1, **characterized in that** at least two structural components (1) in preference are connected to one another at external connecting areas (8) of the continuous fibre strands (3) and are forming a structural body (90).

20. Structural component in accordance with claim 1, **characterized in that** at least two structural components (1) are designed as half-shells and are connected to one another and, e.g., in the form of a U-profile (92) together with a cover (93) form a hollow profile girder (91).

21. Method for the manufacturing of a structural component made out of fibre-reinforced thermoplastic plastic material, with a shaping, long-fibre-reinforced (12) thermoplastic matrix (2) and with an integrated load-bearing, plastified and consolidated, oriented continuous fibre reinforcement (13) in a thermoplastic matrix, whereby a plastified, long-fibre-reinforced plastic matrix (2) is laid corresponding-to-form into an open, two-part form tool (51) in a press (56) and whereby the long-fibre-reinforced matrix (2) and the continuous fibre reinforcement with thermoplastic matrix are fused together, resp., thermoplastically bonded, **characterized in that**
within the same cycle before and/or after the feeding-in of the long-fibre-reinforced thermoplastic matrix (2) by means of a laying device (54) or of a transfer device (55) a preformed supporting structure (4a) with internal connecting areas (7) made of separate, single, load-bearing plastified and consolidated continuous fibre strands (3) is laid into the form tool and is formed or formed outside and transferred into the form tool and by means of fixing means the continuous fibre strands (3) are held in place to such an extent, that with the pressing and closing of the form tool a desired integrated load-bearing and strand-like supporting structure (4) with a defined local position of each single continuous fibre strand (3) within the structural component is produced and whereby with the deposition of the long-fibre-reinforced matrix (2) zones of long-fibre-reinforced matrix (2) are formed between the separate continuous fibre strands (3) and whereby with the pressing a thermoplastic bonding at the interfaces (6) between the long-fibre-reinforced matrix (2) and the separate continuous fibre strands (3) is produced and whereby at least one load-transmitting, flat (F7) and thermoplastically bonded internal connecting area (7) between two separate continuous fibre strands in a defined local position is formed.

22. Method in accordance with claim 21, **characterized in that** first the continuous fibre strands (3) are laid along a predefined laying path (39) into the lower mould half (51.1), thereafter the long-fibre-reinforced matrix (2) is fed-in onto it and then the pressing takes place.

23. Method in accordance with claim 21, **characterized in that** the continuous fibre strands (3) for the forming of the preformed supporting structure (4a) are laid onto a transport mesh (31), fixed on it and subsequently transferred into the open form tool (51).

24. Method in accordance with claim 23, **characterized in that** first the long-fibre-reinforced matrix (2) is laid into the form tool, thereafter the transport mesh (31) with the continuous fibre strands (3) is transferred into the open form tool and finally the pressing takes place.

25. Method in accordance with claim 21, **characterized in that** first the preformed supporting structure (4a) is formed and cooled down to such an extent, that it is non-deformable, subsequently is transferred to the form tool, fixed and if so required superficially heated up to such an extent, that during pressing it is completely thermoplastically bonded with the long-fibre-reinforced matrix (2).

26. Method in accordance with claim 21, **characterized in that** first a first partial structure (4.1) made of continuous fibre strands (3) is fixed in the form tool, then the long-fibre-reinforced matrix (2) is fed in and pressed, subsequently heated up again and a second partial structure (4.2) made of continuous fibre strands (3) is fed-in and with a second pressing process completely thermoplastically bonded.

27. Method in accordance with claim 26, **characterized in that** first continuous fibre strands (3.1) forming a partial structure (4.1) are laid into the lower mould half (51.1), thereafter the long-fibre-reinforced matrix (2) is fed-in and a first pressing takes place, whereupon press and form tool are opened again, on the long-fibre-reinforced matrix(2) a laying path for a second layer of continuous fibre strands is melted open on the surface by means of local heating, continuous fibre strands (3.2) forming a second partial structure (4.2) are laid on it and subsequently pressed and in doing so are thermoplastically bonded with the long-fibre-reinforced matrix (2).

28. Method in accordance with claim 21, **characterized in that** first the beginning (3A) of a continuous fibre strand is fixed on the form tool, subsequently is laid under slight tension and its end (3E), again while maintaining a certain tension, is fixed on the form tool (51), e.g., by means of tensioning elements (80).

29. Method in accordance with claim 21, **characterized in that** several continuous fibre strands (3) with internal connecting areas, resp., cross-over areas (7) are laid one after the other, so that a framework-like supporting structure (11) is produced.

30. Method in accordance with claim 21, **characterized in that** the continuous fibre strands (3) are pressed onto the mould by the laying device (54) dosed in such a manner, that the continuous fibre strands lie flat and assume the desired position and cross-sectional shape in the form tool. (51).

31. Method in accordance with claim 21, **characterized in that** the continuous fibre strands (3), resp., the supporting structure (4) are at least partially, i.e., at the beginning (3A), at directional changes of the laying path and at the end (3E) melted (41) onto the mould.

32. Method in accordance with claim 21, **characterized in that** the continuous fibre strands (3) through contact with the cooler form tool (51) are solidified to such an extent, that they remain fixed during pressing and that they in doing so, however, on the other hand at their interfaces (6) completely fuse together again with the long-fibre-reinforced matrix (2).

33. Method in accordance with claim 21, **characterized in that** at least at the beginning (3A) and end (3E) or also within a continuous fibre strand in molten condition eyes (43) for fixation are melted-in by pressing and partial solidifying and that these formed ends (3A, 3E) after the laying of the continuous fibre strand (3) are superficially melted open again by the hot long-fibre-reinforced matrix (2).

34. Method in accordance with claim 21, **characterized in that** at least at the ends (3A, 3E) or also within the melted open continuous fibre strands holding elements (45) with plug-in holes (46) are melted open, which during the laying of the hot long-fibre-reinforced matrix (2) fuse together with it.

35. Method in accordance with claim 21, **characterized in that** a long-fibre plastifying - and feeding device (52) and a continuous fibre strand plastifying device (53) are used with a control system (57) for the co-ordinated in time controlling of the movement of the installation components and for the temperature conditioning, for the laying of the continuous fibre strands (3), resp., for the formation of a preformed supporting structure (4a) with internal connecting areas (7) and for the corresponding-to-form feeding-in of the long-fibre-reinforced matrix (2) as well as by assigned fixing means (61, 62, 66, 69, 75, 80) for the fixation of the continuous fibre strands (3) during the manufacturing process, e.g. as fixing and tensioning elements like fixing pins (61) and deviating elements (62) which are located on the lower half of the form tool (51.1).

36. Method in accordance with claim 35, **characterized in that** the fixing pins and deviating elements are movable (63) and when the press (56) is closed are pushed against a pre-tensioning (65) by the upper mould half (51.2) or that the fixing pins have a controlled drive (64) and are utilizable for removing the component from the mould
or that the fixing - and tensioning elements (61, 80) are attached outside the structural component (1) to be manufactured, but inside the form tool (51).

37. Method in accordance with claim 35, **characterized in that** the form tool has shapings like channels (66) and steps (67), with which the laid continuous fibre strands (3) are held in place during pressing.

38. Method in accordance with claim 37, **characterized in that** the shapings, i.e., the laying paths (39) in the form tool are thermally insulated (73), resp., conditioned (74).

39. Method in accordance with claim 35, **characterized in that** the laying device (54) has guiding -, shaping - and pressing-on means, e.g., in the form of guide rollers (68) and pressure rollers (69).

40. Method in accordance with claim 35, **characterized in that** a consolidation device (58) is assigned for the continuous fibre strands
or that a heated store (59) for the continuous fibre strands is provided, from which the cut-to-length consolidated continuous fibre strands (3) are taken, melted open and utilized for the formation of the supporting structure (4a) or that a hot gas - or a protective gas conditioning (71) is provided.

## Revendications

1. Elément de construction structural (1) en matière synthétique thermoplastique renforcée par des fibres avec une matrice (2) thermoplastique renforcée par des fibres longues (12) donnant une forme et avec un renforcement à fibres continues (13) intégré, supportant la charge, plastifié, consolidé et orienté dans une matrice thermoplastique, où la matrice (2) renforcée par des fibres longues et le renforcement à fibres continues avec matrice thermoplastique sont fondus ensembles et/ou sont reliés de manière thermoplastique, **caractérisé en ce que** le renforcement à fibres continues se compose de cordes à fibres continues (3) séparées, individuelles, et supportant la charge avec une matrice thermoplastique,
lesquelles sont positionnées respectivement individuellement dans une position définie localement dans l'élément de construction structural et lesquelles forment une structure porteuse (4) semblable à une corde, intégrée, et supportant la charge,
et avec des zones à matrice (2) renforcée par des fibres longues entre les cordes à fibres continues (3) séparées, avec au moins une jointure interne (7) développée de manière plat (F7), transmettant la force, et reliée de manière thermoplastique entre deux cordes séparées à fibres continues (3.1, 3.2) dans une position localement définie,
et où les cordes séparées à fibres continues (3) et la matrice (2) renforcée par des fibres longues forment des surfaces de contact (6) réciproques par lesquelles elles sont reliées ensembles.

2. Elément de construction structural selon la revendication 1, **caractérisé en ce que** les surfaces de contact (6) sont au moins partiellement développées en tant que couches de jointure (6a) formant une zone de transition entre la matrice (2) renforcée par des fibres longues et les cordes à fibres continues (3).

3. Elément de construction structural selon l'une quelconque des revendications 1 ou 2, **caractérisé en ce que** les surfaces de contact (6) sont développées en tant que surfaces (6b) structurées présentant des formations rugueuses.

4. Elément de construction structural selon l'une quelconque des revendications précédentes, **caractérisé en ce que** les cordes à fibres continues (3) de la structure porteuse forment au moins une maille (10) fermée.

5. Elément de construction structural selon l'une quelconque des revendications précédentes, **caractérisé en ce que** les cordes à fibres continues s'étendent en différentes directions et sont reliées ensembles de manière thermoplastique au niveau des jointures (7) internes transmettant la force à la manière d'un treillis (11).

6. Elément de construction structural selon l'une quelconque des revendications précédentes, **caractérisé en ce que** la matière première de matrice de la matrice (2) renforcée par des fibres longues et celle des cordes (3) à fibres continues est de préférence la même, et est cependant au moins suffisamment compatible pour que les deux matières premières puissent être mélangées l'une avec l'autre par diffusion sur les surfaces de contact (6).

7. Elément de construction structural selon l'une quelconque des revendications précédentes, **caractérisé en ce que** les matrices de la matrice (2) renforcée par des fibres longues et des cordes (3) à fibres continues sont en polypropylène (PP), en polyamide (PA), en polytéréphtalate d'éthylène (PET), en polybutènetérephtalate (PBT), en polyuréthanes thermoplastiques (PUR), en polycarbonate (PC), en polyacrylates, en polyimide (PI), en polysulfure de phénylène (PPS) ou en polyétheréthercétone (PEEK), et **en ce que** les fibres de renforcement (13) des cordes à fibres continues (3) sont de préférences en verre, charbon ou aramide, et les fibres de renforcement (12) de la matrice (2) renforcée par des fibres longues, de préférence en verre.

8. Elément de construction structural selon la revendication 1, **caractérisé en ce que** les fibres de renforcement (12) de la matrice (2) renforcée par des fibres longues présentent un pourcentage volumétrique de fibres de 15-25 %, et **en ce que** les cordes à fibres continues (3) présentent un pourcentage volumétrique de fibres (13) d'au moins 40 %, et de préférence de 45 à 60 %.

9. Elément de construction structural selon la revendication 1, **caractérisé en ce que** les cordes à fibres continues sont torsadées (15).

10. Elément de construction structural selon la revendication 1, **caractérisé en ce que** les cordes à fibres continues sont aiguilletées (18), enveloppées (16), ou entourées par un tuyau tressé (17).

11. Elément de construction structural selon la revendication 1, **caractérisé en ce que** la matrice (2) renforcée par des fibres longues présente une proportion importante de fibres (12) d'une longueur d'au moins 5 mm, moyennant quoi la longueur de fibre se situe de préférence essentiellement dans une plage de 10 à 30 mm.

12. Elément de construction structural selon la revendication 1, **caractérisé en ce que** des pièces d'insertion (21) recevant la force (par exemple des ancrages de sangles) sont intégrées, lesquelles sont directement reliées aux cordes à fibres continues (3) et/ou entourées par elles.

13. Elément de construction structural selon la revendication 1, **caractérisé en ce que** d'autres insertions (22) sont intégrées, par exemple des pièces profilées tubulaires (23) à résistance élevée et renforcées par des fibres continues et/ou des couches intermédiaires de textile (24) locales à fibres continues, qui sont reliées avec les cordes à fibres continues (3) et sont fondues ensembles avec la matrice (2) renforcée par des fibres longues.

14. Elément de construction structural selon la revendication 1, **caractérisé en ce que** des cordes à fibres continues forment des sections (25, 26, 27) « dans l'espace ».

15. Elément de construction structural selon la revendication 1, **caractérisé en ce que** des jointures (8) externes des cordes à fibres continues sont prévues.

16. Elément de construction structural selon la revendication 1, **caractérisé en ce que** l'épaisseur de couche (d3) des cordes à fibres continues (3) est au moins aussi importante que l'épaisseur de couche (d2) de la matrice (2) renforcée par des fibres longues qui repose au-dessus.

17. Elément de construction structural selon la revendication 1, **caractérisé en ce que** les jointures (7) transmettant la force sont conçues avec une grande surface (F7).

18. Elément de construction structural selon la revendication 1, **caractérisé en ce que** les jointures (7) présentent une mince couche intermédiaire (9) de matrice renforcée par des fibres longues.

19. Elément de construction structural selon la revendication 1, **caractérisé en ce qu'**au moins deux éléments de construction structuraux (1) sont de préférence reliés ensembles aux jointures (8) externes des cordes à fibres continues (3), et forment un corps structural (90).

20. Elément de construction structural selon la revendication 1, **caractérisé en ce qu'**au moins deux élément de construction structuraux (1) sont conçus en tant que semi-monocoques et sont reliés ensembles et forment par exemple un support profilé creux (91) sous la forme d'un profil en U (92) avec un couvercle (93).

21. Procédé pour la fabrication d'un élément de construction structural en matière synthétique thermoplastique renforcée par des fibres avec une matrice (2) thermoplastique renforcée par des fibres longues (12) conférant une forme et avec un renforcement à fibres continues (13) orienté, intégré, supportant la charge, plastifié et consolidé, dans une matrice thermoplastique, moyennant quoi une matrice (2) thermoplastique renforcée par des fibres longues et plastifiée est déposée de manière adaptée à la forme dans un outil de formage en deux pièces (51) d'une presse (56), et moyennant quoi la matrice (2) renforcée par des fibres longues et le renforcement à fibres continues avec matrice thermoplastique sont fondus ensembles et/ou reliés de manière thermoplastique,
**caractérisé en ce que**
au cours du même cycle avant et/ou après l'introduction de la matrice (2) thermoplastique renforcée par des fibres longues à l'aide d'un dispositif de dépôt (54) ou d'un dispositif de transfert (55), une structure porteuse (4a) préformée avec des jointures (7) internes en cordes à fibres continues (3) séparées, individuelles, supportant la charge, plastifiées et consolidées est déposée dans l'outil de formage et est formée, ou bien est façonnée en-dehors puis transférée dans l'outil de formage, et **en ce que** les cordes à fibres continues (3) sont gardées en place à l'aide de moyens de fixation de manière à ce qu'avec le pressage et la fermeture de l'outil de formage, il y a formation d'une structure porteuse (4) souhaitée intégrée, supportant la charge, et semblable à une corde avec une position localement définie de chaque corde à fibres continues (3) individuelle dans l'élément de construction structural, moyennant quoi avec l'introduction de la matrice (2) renforcée par des fibres longues, des zones en matrice (2) renforcée par des fibres longues sont formées entre les cordes à fibres continues (3) séparées, et moyennant quoi une liaison thermoplastique est établie à l'emplacement des surfaces de contact (6) entre la matrice (2) renforcée par des fibres longues et les cordes à fibres continues (3) séparées lors du moulage par pression, et moyennant quoi au moins une jointure (7) interne formée de manière plat (F7), transmettant la force, et reliée de manière thermoplastique, est formée entre deux cordes à fibres continues séparées dans une position localement définie.

22. Procédé selon la revendication 21, **caractérisé en ce que** d'abord les cordes à fibres continues (3) sont déposées en suivant un tracé de dépôt (39) imposé dans l'outil de formage inférieur (51.1), et **en ce qu'**ensuite la matrice (2) renforcée par des fibres longues est posée par-dessus et qu'ensuite le moulage par pression est effectué.

23. Procédé selon la revendication 21, **caractérisé en ce que** les cordes à fibres continues (3) sont déposées sur un grillage de transport (31) pour la formation de la structure porteuse (4a) préformée, y sont fixées dessus et sont ensuite transférées dans l'outil de formage (51) ouvert.

24. Procédé selon la revendication 23, **caractérisé en ce . que** d'abord la matrice (2) renforcée par des fibres longues est déposée dans l'outil de formage, et **en ce qu'**ensuite le grillage de transport (31) avec les cordes à fibres continues (3) est transféré dans l'outil de formage ouvert, et qu'ensuite le moulage par pression s'en suive.

25. Procédé selon la revendication 21, **caractérisé en ce que** la structure porteuse (4a) préformée est d'abord formée et est refroidie jusqu'à ce qu'elle conserve sa forme, **en ce qu'**elle est ensuite transférée dans l'outil de formage, est fixée et est dans tous les cas échauffée en surface jusqu'à être entière reliée de manière thermoplastique avec la matrice (2) chaude renforcée par des fibres longues lors du moulage par pression.

26. Procédé selon la revendication 21, **caractérisé en ce que** d'abord un premier élément de structure (4.1) en cordes à fibres continues (3) est fixé dans l'outil de formage, **en ce qu'**ensuite la matrice (2) renforcée par des fibres longues est introduite et est moulée par pression, puis est ensuite à nouveau échauffée, et **en ce qu'**un deuxième élément de structure (4.2) en cordes à fibres continues (3) est introduit et est entièrement relié de manière thermoplastique avec un deuxième processus de moulage par pression.

27. Procédé selon la revendication 26, **caractérisé en ce que** d'abord des cordes à fibres continues (3.1) formant un élément de structure (4.1) sont déposées dans la moitié inférieure de moule (51.1), qu'ensuite la matrice (2) renforcée par des fibres longues est introduite, et qu'un premier moulage par pression s'en suive, après quoi la presse et l'outil de formage sont à nouveau ouverts, un tracé de dépôt est ouvert par fusion en surface par chauffage local sur la matrice (2) renforcée par des fibres longues pour une deuxième couche de cordes à fibres continues, **en ce qu'**ensuite des cordes à fibres continues (3.2) sont posées lesquelles forment un deuxième élément de structure (4.2) qui est ensuite moulé par pression et est ainsi relié de manière thermoplastique avec la matrice (2) renforcée par des fibres longues.

28. Procédé selon la revendication 21, **caractérisé en ce que** d'abord un début (3A) d'une corde à fibres continues est fixé sur l'outil de formage et est ensuite déposé avec une légère tension, et **en ce que** sa fin (3E) est à nouveau fixée sur l'outil de formage (51) en maintenant une certaine tension, par exemple à l'aide d'éléments de serrage (80).

29. Procédé selon la revendication 21, **caractérisé en ce que** plusieurs cordes à fibres continues (3) sont déposées l'une après l'autre avec des jointures internes et/ou des points de croisement (7) entre elles, de sorte à former une structure porteuse à la manière d'un treillis (11)

30. Procédé selon la revendication 21, **caractérisé en ce que** les cordes à fibres continues (3) sont pressées contre le moule de manière si dosée via le dispositif de dépôt (54), que les cordes à fibres continues adhèrent uniformément à plat et adoptent la position et la forme de profil transversal souhaités dans l'outil de formage (51).

31. Procédé selon la revendication 21, **caractérisé en ce que** les cordes à fibres continues (3) et/ou la structure porteuse (4) sont fondues au moins en certains endroits sur le moule, à savoir au début (3A), aux changements de direction du tracé de dépôt, et à la fin (3E).

32. Procédé selon la revendication 21, **caractérisé en ce que** les cordes à fibres continues (3) sont durcies par le contact avec l'outil de formage (51) plus froid jusqu'à un point où elles restent fixées lors du moulage par pression, **en ce que** dans ce cas elles fusionnent par contre à nouveau complètement avec la matrice (2) renforcée par des fibres longues au niveau de leurs surfaces de contact (6).

33. Procédé selon la revendication 21, **caractérisé en ce que** des yeux (43) sont fusionnés pour la fixation au moins au début (3A) et à la fin (3E) ou alors également à l'intérieur d'une corde à fibres continues à l'état fondu, par moulage par pression et solidification partielle, et **en ce que** ces extrémité formées (3A, 3E) sont à nouveau fondues en surface et reliées par la matrice (2) chaude renforcée par des fibres longues après le dépôt de la corde à fibres continues (3).

34. Procédé selon la revendication 21, **caractérisé en ce que** au moins aux extrémités (3A, 3E) ou également à l'intérieur des cordes à fibres continues fondues, des éléments de fixation (45) avec des trous d'insertion (46) sont fondus dessus, lesquels fondent ensemble avec la matrice chaude (2) renforcée par des fibres longues lors de son dépôt.

35. Procédé selon la revendication 21, **caractérisé en ce qu'**un dispositif de plastification et de pose de fibres longues (52) et un dispositif de plastification de corde à fibres continues (53) sont utilisés, avec une commande (57) pour la conduite coordonnée du mouvement dans le temps des éléments du dispositif et pour le conditionnement de la température, pour la pose des cordes à fibres continues (3) et/ou la formation d'une structure porteuse préformée (4a) avec des jointures internes (7) et pour l'introduction de la matrice (2) renforcée par des fibres longues adaptée à la forme, et avec des moyens de fixation (61, 62, 66, 69, 75, 80) associés pour la fixation des cordes à fibres continues (3) individuelles pendant le processus de fabrication, par exemple en tant qu'élément de fixation et de serrage tels que des tiges de fixation (61), et des éléments de déviation (62) qui sont disposés sur la partie inférieure de l'outil de formage (51.1).

36. Procédé selon la revendication 35, **caractérisé en ce que** les tiges de fixation et les éléments de déviation sont mobiles (63) et sont poussés en position fermée en opposition à une précontrainte (65) par la partie supérieure (51.2) de l'outil de formage lors de la fermeture de la presse (56),
ou **en ce que** les tiges de fixation présentent un entraînement (64) pouvant être commandé et peuvent être utilisées pour le démoulage, ou **en ce que** des éléments de fixation et de serrage (61, 80) sont aménagés en-dehors de l'élément de construction structural (1) et cependant dans l'outil de formage (51).

37. Procédé selon la revendication 35, **caractérisé en ce que** l'outil de formage présente des formations telles des canaux (66) et interruptions (67) avec lesquelles les cordes à fibres continues (3) déposées sont maintenues en place lors du moulage par pression.

38. Procédé selon la revendication 37, **caractérisé en ce que** les formations, c'est-à-dire les tracés de dépôt (39), sont isolés thermiquement (73) et/ou sont conditionnés (74) dans l'outil de formage.

39. Procédé selon la revendication 35, **caractérisé en ce que** le dispositif de dépôt (54) présente des moyens de guidage, de formage et de pression, par exemple sous la forme de cylindres de guidage (68) et de cylindres de pression (69).

40. Procédé selon la revendication 35, **caractérisé en ce qu'**un dispositif de consolidation (58) est utilisé pour les cordes à fibres continues, ou
**en ce qu'**un réservoir (59) chauffé est utilisé pour les cordes à fibres continues, duquel les cordes à fibres continues (3) tronçonnées et consolidées sont prélevées, sont fondues, et sont utilisées pour la formation de la structure porteuse (4a),
ou **en ce qu'**un conditionnement (71) au gaz de chauffage ou au gaz protecteur est utilisé.
